# EUROPÄISCHE PATENTSCHRIFT

(11) **EP 3 222 002 B1**
(45) Veröffentlichungstag und Bekanntmachung des Hinweises auf die Patenterteilung: **10.10.2018**
(21) Anmeldenummer: 15795153.4
(22) Anmeldetag: 13.11.2015
(51) Int. Cl.: H04L 12/801, H04L 12/26

(54) **ANALYSEVORRICHTUNG ZUR ANALYSE UND MANIPULATION EINER KOMMUNIKATIONSSEQUENZ**
ANALYSIS DEVICE FOR THE ANALYSIS AND MANIPULATION OF A COMMUNICATION SEQUENCE
DISPOSITIF D'ANALYSE POUR L'ANALYSE ET LA MANIPULATION D'UNE SÉQUENCE DE COMMUNICATION

(30) Priorität: 18.11.2014 DE 102014116865
(43) Veröffentlichungstag der Anmeldung: 27.09.2017
(73) Patentinhaber: Phoenix Contact GmbH & Co. KG, 32825 Blomberg (DE)
(72) Erfinder: LESSMANN, Gunnar, 33039 Nieheim (DE); RUSS, Tim, 39104 Magdeburg (DE); KRAUSE, Jan, 39108 Magdeburg (DE)
(74) Vertreter: Patentship Patentanwaltsgesellschaft mbH
(86) Internationale Anmeldenummer: PCT/EP2015/076602
(87) Internationale Veröffentlichungsnummer: WO 2016/079027

(56) Entgegenhaltungen:
- DE-A1-102006 047 762
- US-A- 6 011 830
- LI WEIHAI ET AL: "Vulnerability testinh of WAP based on extended syntax analysis", BROADBAND NETWORK&MULTIMEDIA TECHNOLOGY, 2009. IC-BNMT '09. 2ND IEEE INTERNATIONAL CONFERENCE ON, IEEE, PISCATAWAY, NJ, USA, 18. Oktober 2009 (2009-10-18), Seiten 777-780, XP031576195, ISBN: 978-1-4244-4590-5
- DIAZ M ET AL: "OBSERVER - A CONCEPT FOR FORMAL ON-LINE VALIDATION OF DISTRIBUTED SYSTEMS", IEEE TRANSACTIONS ON SOFTWARE ENGINEERING, IEEE SERVICE CENTER, LOS ALAMITOS, CA, US, Bd. 20, Nr. 12, 31. Dezember 1994 (1994-12-31), Seiten 900-913, XP000483036, ISSN: 0098-5589, DOI: 10.1109/32.368136
- CHEN TSONG YUEH ET AL: "Conformance Testing of Network Simulators Based on Metamorphic Testing Technique", 9. Juni 2009 (2009-06-09), GRID AND COOPERATIVE COMPUTING - GCC 2004 : THIRD INTERNATIONAL CONFERENCE, WUHAN, CHINA, OCTOBER 21 - 24, 2004 IN: LECTURE NOTES IN COMPUTER SCIENCE , ISSN 0302-9743 ; VOL. 3251; [LECTURE NOTES IN COMPUTER SCIENCE , ISSN 1611-3349], SPRINGER VERLAG,, XP047307677, ISSN: 0302-9743 ISBN: 978-3-642-24711-8 das ganze Dokument

## Beschreibung

Die vorliegende Erfindung betrifft eine Analysevorrichtung zur Analyse und Manipulation einer Kommunikationssequenz.

Zur Analyse einer Kommunikation von Kommunikationsteilnehmern in einem Kommunikationsnetzwerk werden häufig zwischen den Kommunikationsteilnehmern ausgetauschte Datenpakete, welche eine Kommunikationssequenz bilden können, aufgezeichnet und manuell überprüft. Beispielsweise werden zwischen zwei Kommunikationsteilnehmern ausgetauschte Datenpakete mittels eines zwischen den Kommunikationsteilnehmern geschalteten Computers aufgezeichnet und es werden die aufgezeichneten Datenpakete durch einen Benutzer des Computers auf Kommunikationsfehler überprüft.

Insbesondere in echtzeitfähigen Kommunikationsnetzwerken, wie echtzeitfähigen Ethernet-Kommunikationsnetzwerken, wird häufig innerhalb einer kurzen Zeitdauer eine Vielzahl von Datenpaketen zwischen einer weiteren Vielzahl von Kommunikationsteilnehmern ausgetauscht. Hierdurch kann eine manuelle Überprüfung der aufgezeichneten Datenpakete zeitaufwändig sein und als unkomfortabel empfunden werden.

Ferner werden zur Suche nach hochsporadischen Fehlern häufig zwischen den Kommunikationsteilnehmern ausgetauschte Datenpakete über einen großen Zeitraum aufgezeichnet und manuell überprüft. Hierbei kann eine große zu speichernde Datenmenge anfallen, wodurch eine derartige Analyse ferner kostenintensiv sein kann.

Die Druckschrift US 6,011,830 A beschreibt einen Testmustergenerator, der einen Petri-Netz-Modell-Generator aufweist, welcher ein generiertes Petri-Netz-Modell in einem Petri-Netz-Modell-Speicher ablegt.

Der Artikel von Li Weihai "Vulnerability testing of WAP based on extended syntax analysis", Proceedings of IC-BNMT2009, S. 777-780, vom 18. Oktober 2009 betrifft ein Verfahren zur Prüfung auf Schwachstellen in Implementierungen gemäß dem Wireless Application Protocol (WAP) bzw. Wireless Session Protocol (WSP) unter Verwendung eines Petrinetzes.

Der Artikel von Michel Diaz "Observer - A Concept for Formal On-Line Validation of Distributed Systems", IEEE Transactions on Software Engineering, Bd. 20, Nr. 12, S. 900-913, vom 31. Dezember 1994 betrifft ein Überwachungsmodell, bei welchem eine Sequenz von Nachrichten mit einem Petrinetz verglichen wird, um eine Kommunikation in einem verteilten System zu überwachen.
Es ist die der Erfindung zugrundeliegende Aufgabe, ein effizientes Konzept zur Analyse einer Kommunikationssequenz anzugeben.
Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.
Gemäß einem ersten Aspekt der Erfindung wird die Aufgabe durch eine Analysevorrichtung zur Analyse einer Kommunikationssequenz gemäß unabhängigem Anspruch 1 gelöst. Dadurch wird der Vorteil erreicht, dass die Kommunikationssequenz automatisiert überprüft werden kann. Darüber hinaus ist diese Überprüfung mit einer hohen Verarbeitungsgeschwindigkeit möglich.
Die Analysevorrichtung kann ein Computer, ein Laptop, ein Smartphone oder ein Tablet sein. Ferner kann die Analysevorrichtung in einem Feldgerät oder in einem Steuerungsgerät, wie einer Steuerung, integriert sein. Der Prozessor kann eine Central Processing Unit (CPU) der Analysevorrichtung sein.
Die Kommunikationssequenz kann zwischen Kommunikationsteilnehmern, wie Computern, Feldgeräten oder Steuerungsgeräten, in einem Kommunikationsnetzwerk ausgetauschte Datenpakete umfassen, wobei die Datenpakete zwischen den Kommunikationsteilnehmern ausgetauschte Nachrichten umfassen können. Beispielsweise werden die Datenpakete mittels eines Network-Taps erfasst und der Analysevorrichtung zugeführt. Ferner kann die Analysevorrichtung eine Kommunikationsschnittstelle umfassen, wie eine Ethernet-Schnittstelle zum Erfassen von Datenpaketen und/oder zum Empfangen von erfassten Datenpaketen, insbesondere mittels eines Network-Taps oder mittels eines Switches mit Mirroring-Port. Die Analysevorrichtung kann ferner eine Speicherschnittstelle, wie eine Universal Serial Bus (USB) -Schnittstelle, zum Anschließen eines weiteren Speichers, wie eines USB-Speichers oder USB-Sticks, umfassen, in welchem die Kommunikationssequenz gespeichert ist und aus welchem die Kommunikationssequenz in den Speicher kopierbar ist. Das Kommunikationsnetzwerk kann ein Process Field Network (Profinet), ein Industrial Ethernet-Netzwerk, ein Ethernet-Netzwerk, insbesondere ein echtzeitfähiges Ethernet-Netzwerk, ein Local Area Network (LAN), ein Wireless Local Area Network (WLAN), das Internet oder ein Telefonnetzwerk sein.
Der Speicher kann ein Random-Access Memory (RAM) -Speicherelement, ein Hard Disk Drive (HDD) -Speicherelement, wie eine Festplatte, ein Flash-Speicherelement, wie ein Solid-State-Drive (SSD), und/oder ein Electrically Erasable Programmable Read-Only Memory (EEPROM) -Speicherelement umfassen.

Die Sollkommunikationssequenz kann in Form einer textuellen Beschreibung in dem Speicher vorgespeichert sein. Die textuelle Beschreibung kann erwartete, zwischen den Kommunikationsteilnehmern ausgetauschte Nachrichten umfassen, welche untereinander bzw. nacheinander aufgelistet sind. Ferner kann die textuelle Beschreibung Fragmente, wie Schleifen oder Alternativen, umfassen, wodurch mittels der Sollkommunikationssequenz ein dynamischer Kommunikationsablauf beschrieben werden kann.

Der Prozessor kann ferner ausgebildet sein, die Kommunikationssequenz und/oder die Sollkommunikationssequenz, insbesondere mittels einer in dem Speicher vorgespeicherten Bibliothek, in ein internes Sequenzmodell, z. B. in Form eines Sequenzdiagramms, umzuwandeln. Hierbei können einzelne Nachrichten und/oder Fragmente sequentiell miteinander verknüpft werden. Das Sequenzdiagramm kann ein Diagramm nach dem Standard Unified Modeling Language (UML) Sequence Diagram (SD), ein Diagramm nach dem Standard ITU-T MSC der Internationalen Fernmeldeunion oder ein aus den beiden vorgenannten Standards abgeleitetes Diagramm sein. Gemäß einer Ausführungsform kann die Sollkommunikationssequenz bereits als Sequenzmodell, z. B. als Sequenzdiagramm, in dem Speicher gespeichert sein.

Zum Erstellen des Petrinetzes in Abhängigkeit von der ausgelesenen Sollkommunikationssequenz kann das Sequenzdiagramm derart in ein Petrinetz umgewandelt werden, dass valide Nachrichten in dem zu analysierenden Kommunikationsnetzwerk durch feuerbare Transitionen modelliert werden. Damit kann jeder Transition mindestens ein auslösendes Ereignis zugeordnet werden. Ferner kann für die Analyse der Kommunikationssequenz eine Liste von relevanten Nachrichten erstellt werden. Eine Einführung in Petrinetze ist beispielsweise in Priese, L; Wimmel, H.: "Petri-Netze", 2. Auflage, Springer, Berlin, 2008, gegeben.

Zum Vergleichen der Kommunikationssequenz mit dem erstellen Petrinetz kann eine Konformitätsprüfung durchgeführt werden. Hierbei kann ein in der Kommunikationssequenz umfasstes Datenpaket dekodiert und mit der Liste der relevanten Datenpakete verglichen werden. Ist das dekodierte Datenpaket in der Liste der relevanten Datenpakete enthalten, so kann eine zu dem dekodierten Datenpaket zugehörige Transition in dem erstellten Petrinetz gesucht werden. Kann die Transition feuern, so kann die in dem dekodierten Nachrichtenpakt umfasste Nachricht valide sein. Kann die Transition nicht feuern, so kann die in dem dekodierten Nachrichtenpaket umfasste Nachricht invalide sein. Die Konformitätsprüfung kann für alle in der Kommunikationssequenz umfassten Datenpakete durchgeführt werden.

Gemäß einer Ausführungsform kann die Analysevorrichtung ein Anzeigeelement, wie eine Liquid Crystal Display (LCD) -Anzeige, umfassen, mittels welcher die Sollkommunikationssequenz und/oder die Kommunikationssequenz grafisch, insbesondere in Form eines Sequenzdiagramms, angezeigt werden kann. Ferner können mittels des Anzeigeelementes Unterschiede zwischen der Sollkommunikationssequenz und der Kommunikationssequenz in textueller oder grafischer Form dargestellt werden.

In einer vorteilhaften Ausführungsform der Analysevorrichtung ist der Prozessor ausgebildet, die Kommunikationssequenz auf Konformität mit dem erstellten Sollverhalten (in Form eines Petrinetzes) zu prüfen, um die Kommunikationssequenz mit dem erstellten Petrinetz zu vergleichen. Dadurch wird der Vorteil erreicht, dass ein Kommunikationsfehler in der Kommunikationssequenz effizient erkannt werden kann.

In einer weiteren vorteilhaften Ausführungsform der Analysevorrichtung ist die Sollkommunikationssequenz in Form einer textuellen Sequenz oder in Form eines Sequenzdiagramms in dem Speicher gespeichert. Dadurch wird der Vorteil erreicht, dass das Petrinetz effizient erstellt werden kann.

In einer weiteren vorteilhaften Ausführungsform der Analysevorrichtung ist die Analysevorrichtung mit einem Editor zum Erstellen der Sollkommunikationssequenz ausgebildet. Dadurch wird der Vorteil erreicht, dass die Sollkommunikationssequenz von einem Benutzer der Analysevorrichtung erstellt werden kann.

Der Editor kann durch ein grafisches Computerprogramm, welches eine Benutzeroberfläche zum Erstellen der Sollkommunikationssequenz erzeugt, bereitgestellt sein. Ferner kann die Analysevorrichtung ein Anzeigeelement, wie eine LCD-Anzeige, zum grafischen Anzeigen der Benutzeroberfläche und/oder ein Bedienelement, wie eine Tastatur und/oder eine Maus, zum Bedienen der Benutzeroberfläche umfassen.

In einer weiteren vorteilhaften Ausführungsform der Analysevorrichtung ist der Prozessor ferner ausgebildet, auf der Basis des Vergleichs der Kommunikationssequenz mit dem erstellten Petrinetz einen Analysebericht zu erstellen. Dadurch wird der Vorteil erreicht, dass ein Ergebnis des Vergleichs der Kommunikationssequenz mit dem erstellten Petrinetz gespeichert werden kann.
Der Analysebericht kann ein Ergebnis des Vergleichs der Kommunikationssequenz mit dem erstellten Petrinetz umfassen. Beispielsweise werden in dem Analysebericht eingetretene Ereignisse und/oder Übereinstimmungen und Abweichungen zwischen der Kommunikationssequenz und dem erstellten Petrinetz protokolliert. Ferner kann der Analysebericht in Form einer Textdatei, wie einem Text-Log, oder in Form eines Sequenzdiagramms erstellt werden.
In einer weiteren vorteilhaften Ausführungsform der Analysevorrichtung ist die Analysevorrichtung mit einem Anzeigeelement zum grafischen Anzeigen des erstellten Analyseberichts ausgebildet. Dadurch wird der Vorteil erreicht, dass ein Ergebnis des Vergleichs der Kommunikationssequenz mit dem erstellten Petrinetz angezeigt werden kann. Das Anzeigeelement kann eine LCD-Anzeige oder ein Kathodenstrahlröhrenbildschirm sein. Ferner kann der Analysebericht in Textform oder grafisch in Form eines Sequenzdiagramms angezeigt werden.
In einer weiteren vorteilhaften Ausführungsform der Analysevorrichtung ist die Kommunikationssequenz in dem Speicher gespeichert, und ist der Prozessor ausgebildet, die Kommunikationssequenz aus dem Speicher auszulesen. Dadurch wird der Vorteil erreicht, dass eine aufgezeichnete Kommunikationssequenz analysiert werden kann.
Die Kommunikationssequenz kann beispielsweise in Form einer Packet Capture (PCAP) - Datei in dem Speicher gespeichert sein. Beispielsweise wird die PCAP-Datei mittels eines Computers und einer Analysesoftware, wie Wireshark oder Tcpdump, aufgezeichnet und in den Speicher der Analysevorrichtung kopiert. Hierdurch kann ein Offline-Modus zur Analyse der Kommunikationssequenz bereitgestellt werden.

Dadurch, dass die Analysevorrichtung mit einer Kommunikationsschnittstelle, welche ausgebildet ist, in einem Kommunikationsnetzwerk übertragene Datenpakete zu erfassen, um die Kommunikationssequenz zu erhalten, ausgebildet ist, wird der Vorteil erreicht, dass eine laufende Kommunikation analysiert werden kann.

Die Kommunikationsschnittstelle kann eine Ethernet-Schnittstelle, eine LAN-Schnittstelle und/oder eine WLAN-Schnittstelle umfassen. Ferner kann die Kommunikationsschnittstelle eine Mehrzahl von Schnittstellen, insbesondere von Ethernet-Schnittstellen, umfassen. Beispielsweise beträgt die Mehrzahl 2, 3, 4, 5, 6, 7, 8, 9 oder 10.
Das Kommunikationsnetzwerk kann ein Process Field Network (Profinet), ein Industrial Ethernet-Netzwerk, ein Ethernet-Netzwerk, insbesondere ein echtzeitfähiges Ethernet-Netzwerk, ein Local Area Network (LAN), ein Wireless Local Area Network (WLAN), das Internet oder ein Telefonnetzwerk sein.
In einer weiteren vorteilhaften Ausführungsform der Analysevorrichtung umfasst die Kommunikationsschnittstelle zumindest eine Ethernet-Schnittstelle. Dadurch wird der Vorteil erreicht, dass eine Kommunikationssequenz in einem Ethernet-Kommunikationsnetzwerk, insbesondere in einem Profinet-Kommunikationsnetzwerk, erfasst werden kann.
In einer weiteren vorteilhaften Ausführungsform der Analysevorrichtung umfasst die Kommunikationsschnittstelle zwei Ethernet-Schnittstellen. Dadurch wird der Vorteil erreicht, dass die Analysevorrichtung zwischen zwei Kommunikationsteilnehmer geschaltet werden kann, um alle zwischen den beiden Kommunikationsteilnehmern ausgetauschten Datenpakete zu erfassen.

Dadurch, dass in dem Speicher eine Modifizierungsvorschrift gespeichert, und der Prozessor ferner ausgebildet ist, die Modifizierungsvorschrift aus dem Speicher auszulesen, und ein mittels der Kommunikationsschnittstelle erfasstes Datenpaket in Abhängigkeit von der ausgelesenen Modifizierungsvorschrift zu modifizieren, um eine modifizierte Kommunikationssequenz zu erhalten, wird der Vorteil erreicht, dass eine Reaktion eines Kommunikationsteilnehmers auf eine veränderte Kommunikation analysiert werden kann. Die Modifizierungsvorschrift kann in Form einer textuellen Sequenz oder in Form eines Sequenzdiagramms in dem Speicher gespeichert sein. Ferner kann der Prozessor ausgebildet sein, das erfasste Datenpaket zu dekodieren, um eine dekodierte Nachricht zu erhalten. Der Prozessor kann ferner ausgebildet sein, einen oder mehrere Parameter der dekodierten Nachricht entsprechend der Modifizierungsvorschrift zu ändern. Ferner kann der Prozessor ausgebildet sein, das erfasste Datenpaket zu löschen. Dadurch wird es nicht zum eigentlichen Empfänger weitergeleitet. Dies modifiziert ebenfalls die Kommunikation in Abhängigkeit von der ausgelesenen Modifizierungsvorschrift.

Gemäß einer Ausführungsform kann der Prozessor ausgebildet sein, das erfasste Datenpaket zu dekodieren, ein Ergebnis des Dekodierens in ein Ereignis umzuwandeln, und zu überprüfen, ob das Ereignis einer Transition in dem Petrinetz zuordenbar ist, um das erfasste Datenpaket zu modifizieren.

Gemäß einer weiteren Ausführungsform kann die Analysevorrichtung ferner ausgebildet sein, ein mittels der Kommunikationsschnittstelle erfasstes Datenpaket zeitlich verzögert oder mehrfach, insbesondere zweimal, auszugeben, um eine modifizierte Kommunikationssequenz zu erhalten.

In einer weiteren vorteilhaften Ausführungsform der Analysevorrichtung ist die Kommunikationsschnittstelle ausgebildet, das modifizierte Datenpaket auszugeben. Dadurch wird der Vorteil erreicht, dass das modifizierte Datenpaket anstelle des ursprünglichen Datenpakets an einen Empfänger übermittelt werden kann. Hierdurch kann eine Manipulation der Kommunikation zwischen Kommunikationsteilnehmern in dem Kommunikationsnetzwerk erreicht werden.

In einer weiteren vorteilhaften Ausführungsform der Analysevorrichtung ist der Prozessor ferner ausgebildet, die modifizierte Kommunikationssequenz mit dem erstellten Petrinetz zu vergleichen und auf der Basis des Vergleichs der modifizierten Kommunikationssequenz mit dem erstellten Petrinetz einen weiteren Analysebericht zu erstellen. Dadurch wird der Vorteil erreicht, dass ein Ergebnis des Vergleichs der modifizierten Kommunikationssequenz mit dem erstellten Petrinetz gespeichert werden kann.

Zum Vergleichen der modifizierten Kommunikationssequenz mit dem erstellen Petrinetz kann die oben beschriebene Konformitätsprüfung durchgeführt werden. Ferner kann der weitere Analysebericht ein Ergebnis des Vergleichs der modifizierten Kommunikationssequenz mit dem erstellten Petrinetz umfassen. Beispielsweise werden in dem weiteren Analysebericht eingetretene Ereignisse und/oder Übereinstimmungen und Abweichungen zwischen der modifizierten Kommunikationssequenz und dem erstellten Petrinetz protokolliert. Ferner kann der weitere Analysebericht in Form einer Textdatei, wie einem Text-Log, oder in Form eines Sequenzdiagramms, erstellt werden. Gemäß einer Ausführungsform können der Analysebericht und der weitere Analysebericht zu einem gemeinsamen Analysebericht zusammengefasst werden.
In einer weiteren vorteilhaften Ausführungsform der Analysevorrichtung ist die Analysevorrichtung mit einem Anzeigeelement zum grafischen Anzeigen des erstellten weiteren Analyseberichts ausgebildet. Dadurch wird der Vorteil erreicht, dass ein Ergebnis des Vergleichs der modifizierten Kommunikationssequenz mit dem erstellten Petrinetz angezeigt werden kann.
Das Anzeigeelement kann eine LCD-Anzeige sein. Ferner kann der weitere Analysebericht in Textform oder grafisch in Form eines Sequenzdiagramms angezeigt werden. Gemäß einer Ausführungsform kann ferner der gemeinsame Analysebericht in Textform oder grafisch in Form eines Sequenzdiagramms angezeigt werden.
In einer weiteren vorteilhaften Ausführungsform der Analysevorrichtung ist die Modifizierungsvorschrift in Form einer textuellen Sequenz oder in Form eines Sequenzdiagramms in dem Speicher gespeichert. Dadurch wird der Vorteil erreicht, dass die Modifizierungsvorschrift effizient in das Petrinetz integriert werden kann.
In einer weiteren vorteilhaften Ausführungsform der Analysevorrichtung ist die Analysevorrichtung mit einem Editor zum Erstellen der Modifizierungsvorschrift ausgebildet. Dadurch wird der Vorteil erreicht, dass die Modifizierungsvorschrift von einem Benutzer der Analysevorrichtung erstellt werden kann.
Der Editor kann durch ein grafisches Computerprogramm, welches eine Benutzeroberfläche zum Erstellen der Modifizierungsvorschrift und/oder einer Selektionsvorschrift zum Selektieren eines zu modifizierenden Datenpaketes erzeugt, bereitgestellt sein. Ferner kann die Analysevorrichtung ein Anzeigeelement, wie eine LCD-Anzeige, zum grafischen Anzeigen der Benutzeroberfläche und/oder ein Bedienelement, wie eine Tastatur und/oder eine Maus, zum Bedienen der Benutzeroberfläche umfassen.
Gemäß einem zweiten Aspekt der Erfindung wird die Aufgabe durch ein Verfahren zur Analyse einer Kommunikationssequenz gemäß unabhängigem Anspruch 14 gelöst.

Das Verfahren kann mittels der oben beschriebenen Analysevorrichtung, mittels eines Computers, mittels eines Rechners, mittels eines Laptops, mittels eines Smartphones oder mittels eines Tablets ausgeführt werden.
Die Kommunikationssequenz kann zwischen Kommunikationsteilnehmern, wie Computern, Feldgeräten oder Steuerungsgeräten, in einem Kommunikationsnetzwerk ausgetauschte Datenpakete umfassen, wobei die Datenpakete zwischen den Kommunikationsteilnehmern ausgetauschte Nachrichten umfassen können. Beispielsweise werden die Datenpakete mittels eines Network-Taps erfasst.
Das Kommunikationsnetzwerk kann ein Process Field Network (Profinet), ein Industrial Ethernet-Netzwerk, ein Ethernet-Netzwerk, insbesondere ein echtzeitfähiges Ethernet-Netzwerk, ein Local Area Network (LAN), ein Wireless Local Area Network (WLAN), das Internet oder ein Telefonnetzwerk sein.
Die Sollkommunikationssequenz kann in Form einer textuellen Beschreibung in dem Speicher vorgespeichert sein. Die textuelle Beschreibung kann erwartete, zwischen den Kommunikationsteilnehmern ausgetauschte Nachrichten umfassen, welche untereinander bzw. nacheinander aufgelistet sind. Ferner kann die textuelle Beschreibung Fragmente, wie Schleifen oder Alternativen, umfassen, wodurch mittels der Sollkommunikationssequenz ein dynamischer Kommunikationsablauf beschrieben werden kann.
Die Kommunikationssequenz und/oder die Sollkommunikationssequenz kann, insbesondere mittels einer in dem Speicher vorgespeicherten Definitions-Bibliothek, in ein internes Sequenzmodell, wie ein Sequenzdiagramm, umgewandelt werden. Hierbei können einzelne Nachrichten und/oder Fragmente sequentiell miteinander verknüpft werden. Das Sequenzdiagramm kann ein Diagramm nach dem Standard Unified Modeling Language (UML) Sequence Diagram (SD), ein Diagramm nach dem Standard ITU-T Message Sequence Chart (MSC) der Internationalen Fernmeldeunion oder ein aus den beiden vorgenannten Standards abgeleitetes Diagrammsein. Gemäß einer Ausführungsform kann die Sollkommunikationssequenz bereits als Sequenzdiagramm in dem Speicher gespeichert sein.

Zum Erstellen des Petrinetzes in Abhängigkeit von der ausgelesenen Sollkommunikationssequenz kann das Sequenzdiagramm derart in ein Petrinetz umgewandelt werden, dass valide Nachrichten in dem zu analysierenden Kommunikationsnetzwerk durch feuerbare Transitionen modelliert werden. Damit kann jeder Transition mindestens ein auslösendes Ereignis zugeordnet werden. Ferner kann für die Analyse der Kommunikationssequenz eine Liste von relevanten Nachrichten erstellt werden. Zum Vergleichen der Kommunikationssequenz mit dem erstellen Petrinetz kann eine Konformitätsprüfung durchgeführt werden. Hierbei kann ein in der Kommunikationssequenz umfasstes Datenpaket dekodiert und mit der Liste der relevanten Datenpakte verglichen werden. Ist das dekodierte Datenpaket in der Liste der relevanten Datenpakte enthalten, so kann eine zu dem dekodierten Datenpaket zugehörige Transition in dem erstellten Petrinetz gesucht werden. Kann die Transition gefeuert werden, so kann die in dem dekodierten Nachrichtenpakte umfasste Nachricht valide sein. Kann die Transition nicht gefeuert werden, so kann die in dem dekodierten Nachrichtenpakte umfasste Nachricht invalid sein. Die Konformitätsprüfung kann für alle in der Kommunikationssequenz umfassten Datenpakete durchgeführt werden.

Durch das Erfassen von in einem Kommunikationsnetzwerk übertragenen Datenpaketen mittels einer Kommunikationsschnittstelle wird der Vorteil erreicht, dass eine laufende Kommunikation analysiert werden kann.

Durch die Verfahrensschritte: Auslesen einer Modifizierungsvorschrift aus dem Speicher; und Modifizieren eines mittels der Kommunikationsschnittstelle erfassten Datenpaketes in Abhängigkeit von der ausgelesenen Modifizierungsvorschrift wird der Vorteil erreicht, dass eine Reaktion eines Kommunikationsteilnehmers auf einen Kommunikationsfehler analysiert werden kann. Die Modifizierungsvorschrift kann in Form einer textuellen Sequenz oder in Form eines Sequenzdiagramms in dem Speicher gespeichert sein. Ferner kann das erfasste Datenpaket dekodiert werden, um eine dekodierte Nachricht zu erhalten, und ein oder mehrere Parameter der dekodierten Nachricht entsprechend der Modifizierungsvorschrift geändert werden. Ferner kann das erfasste Datenpaket gelöscht werden, um das erfasste Datenpaket in Abhängigkeit von der ausgelesenen Modifizierungsvorschrift zu modifizieren.

Gemäß einer Ausführungsform kann das erfasste Datenpaket dekodiert werden, ein Ergebnis des Dekodierens in ein Ereignis umgewandelt werden, und überprüft werden, ob das Ereignis einer Transition in dem Petrinetz zuordenbar ist, um das erfasste Datenpaket zu modifizieren.

In einer weiteren vorteilhaften Ausführungsform des Verfahrens umfasst das Verfahren ferner den Verfahrensschritt: Ausgeben des modifizierten Datenpaketes über die Kommunikationsschnittstelle. Dadurch wird der Vorteil erreicht, dass das modifizierte Datenpaket anstelle des ursprünglichen Datenpakets an einen Empfänger übermittelt werden kann. Hierdurch kann eine Manipulation der Kommunikation zwischen Kommunikationsteilnehmern in dem Kommunikationsnetzwerk erreicht werden.

Die Erfindung kann in Hardware und/oder Software realisiert werden.

Ausführungsbeispiele der Erfindung sind in den Zeichnungen dargestellt und werden im Folgenden näher beschrieben.

Es zeigen:
- Fig. 1: eine schematische Darstellung einer Analysevorrichtung;
- Fig. 2: ein schematisches Diagramm eines Verfahrens zur Analyse einer Kommunikationssequenz;
- Fig. 3: eine Anordnung zur Analyse einer Kommunikationssequenz;
- Fig. 4: eine weitere Anordnung zur Analyse einer Kommunikationssequenz;
- Fig. 5: eine weitere Anordnung zur Analyse einer Kommunikationssequenz;
- Fig. 6: eine weitere Anordnung zur Analyse einer Kommunikationssequenz;
- Fig. 7: ein schematisches Diagramm zur Datenverarbeitung in der Analysevorrichtung;
- Fig. 8: ein schematisches Diagramm zum Vergleichen einer Kommunikationssequenz mit einer Sollkommunikationssequenz;
- Fig. 9A: eine Darstellung einer Sollkommunikationssequenz in Form einer textuellen Sequenz;
- Fig. 9B: eine Darstellung der in Fig. 9A gezeigten textuellen Sequenz als Sequenzdiagramm;
- Fig. 10: ein schematisches Diagramm zum Beschreiben der Sollkommunikationssequenz;
- Fig. 11A: ein Sequenzdiagramm;
- Fig. 11B: ein dem in Fig. 11A gezeigten Sequenzdiagramm zugeordnetes Petrinetz;
- Fig. 12: einen Kommunikationsverlauf zwischen einem Steuergerät zum Steuern der Analysevorrichtung und der Analysevorrichtung;
- Fig. 13: eine Definition für ein Diagnosebeispiel;
- Fig. 14A: eine Modifizierungsvorschrift für das in Fig. 13 gezeigte Diagnosebeispiel; und
- Fig. 14B: ein automatisch generiertes weiteres Petrinetz für die in Fig. 14A gezeigte Modifizierungsvorschrift.

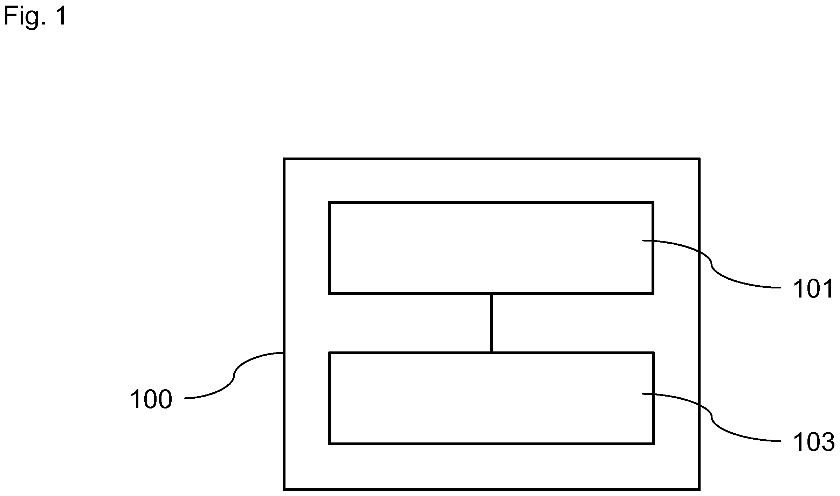

Fig. 1 zeigt eine schematische Darstellung einer Analysevorrichtung 100. Die Analysevorrichtung 100 umfasst einen Speicher 101 und einen Prozessor 103, welche miteinander verbunden sind.

Die Analysevorrichtung 100 zur Analyse einer Kommunikationssequenz kann ausgebildet sein mit: dem Speicher 101, in welchem eine Sollkommunikationssequenz gespeichert ist; und dem Prozessor 103, welcher ausgebildet ist, die Sollkommunikationssequenz aus dem Speicher 101 auszulesen, in Abhängigkeit von der ausgelesenen Sollkommunikationssequenz ein Petrinetz zu erstellen und die Kommunikationssequenz mit dem erstellten Petrinetz zu vergleichen, um die Kommunikationssequenz zu analysieren.

Die Analysevorrichtung 100 kann ein Computer, ein Rechner, ein Laptop, ein Smartphone oder ein Tablet sein. Ferner kann die Analysevorrichtung 100 in einem Feldgerät oder in einem Steuerungsgerät, wie einer Steuerung, integriert sein. Der Prozessor 103 kann eine Central Processing Unit (CPU) der Analysevorrichtung 100 sein.

Die Kommunikationssequenz kann zwischen Kommunikationsteilnehmern, wie Computern, Feldgeräten oder Steuerungsgeräten, in einem Kommunikationsnetzwerk ausgetauschte Datenpakete umfassen, wobei die Datenpakete zwischen den Kommunikationsteilnehmern ausgetauschte Nachrichten umfassen können. Beispielsweise werden die Datenpakete mittels eines Network-Taps erfasst und der Analysevorrichtung 100 zugeführt. Ferner kann die Analysevorrichtung 100 eine Kommunikationsschnittstelle, wie eine Ethernet-Schnittstelle, zum Erfassen von Datenpaketen und/oder zum Empfangen von erfassten, insbesondere mittels eines Network-Taps oder mittels eines Switches mit Mirroring-Port erfassten, Datenpaketen, umfassen. Die Analysevorrichtung 100 kann ferner eine Speicherschnittstelle, wie eine Universal Serial Bus (USB) -Schnittstelle, zum Anschließen eines weiteren Speichers, wie eines USB-Speichers oder USB-Sticks, umfassen, in welchem die Kommunikationssequenz gespeichert ist und aus welchem die Kommunikationssequenz in den Speicher 101 kopierbar ist.

Das Kommunikationsnetzwerk kann ein Process Field Network (Profinet), ein Industrial Ethernet-Netzwerk, ein Ethernet-Netzwerk, insbesondere ein echtzeitfähiges Ethernet-Netzwerk, ein Local Area Network (LAN), ein Wireless Local Area Network (WLAN), das Internet oder ein Telefonnetzwerk sein.

Der Speicher 101 kann ein Random-Access Memory (RAM) -Speicherelement, ein Hard Disk Drive (HDD) -Speicherelement, wie eine Festplatte, ein Flash-Speicherelement, wie ein Solid-State-Drive (SSD), und/oder ein Electrically Erasable Programmable Read-Only Memory (EEPROM) -Speicherelement umfassen.

Die Sollkommunikationssequenz kann in Form einer textuellen Sequenz in dem Speicher 101 vorgespeichert sein. Die textuelle Sequenz kann erwartete, zwischen den Kommunikationsteilnehmern ausgetauschte Nachrichten umfassen, welche untereinander oder nacheinander aufgelistet sind. Ferner kann die textuelle Sequenz Fragmente, wie Schleifen oder Alternativen, umfassen, wodurch mittels der Sollkommunikationssequenz ein dynamischer Kommunikationsablauf beschrieben werden kann.

Der Prozessor 103 kann ferner ausgebildet sein, die Kommunikationssequenz und/oder die Sollkommunikationssequenz, insbesondere mittels einer in dem Speicher 101 vorgespeicherten Bibliothek, in ein internes Sequenzdiagramm, wie ein Sequenzmodell, umzuwandeln. Hierbei können einzelne Nachrichten und/oder Fragmente sequentiell miteinander verknüpft werden. Das Sequenzdiagramm kann ein Diagramm nach dem Standard Unified Modeling Language (UML) Sequence Diagram (SD), ein Diagramm nach dem Standard ITU-T Message Sequence Chart (MSC) der Internationalen Fernmeldeunion oder ein aus den beiden vorgenannten Standards abgeleitetes Diagramm sein. Gemäß einer Ausführungsform kann die Sollkommunikationssequenz bereits als Sequenzdiagramm in dem Speicher 101 gespeichert sein.

Zum Erstellen des Petrinetzes in Abhängigkeit von der ausgelesenen Sollkommunikationssequenz kann das Sequenzdiagramm derart in ein Petrinetz umgewandelt werden, dass valide Nachrichten in dem zu analysierenden Kommunikationsnetzwerk durch feuerbare Transitionen modelliert werden. Damit kann jeder Transition mindestens ein auslösendes Ereignis zugeordnet werden. Ferner kann für die Analyse der Kommunikationssequenz eine Liste von relevanten Nachrichten erstellt werden. Eine Umwandlung von Sequenzdiagrammen in Petrinetze ist beispielsweise in der Druckschrift Ribeiro, Ö. R. und Fernandes, J. M.: "Some Rules to Transform Sequence Diagrams into Coloured Petri Nets", 7th Workshop and Tutorial on Practical Use of Coloured Petri Nets and the CPN Tools (CPN 2006), Aarhus, Dänemark, Oktober, 2006, beschrieben, deren Inhalt hiermit durch Bezugnahme aufgenommen wird.

Zum Vergleichen der Kommunikationssequenz mit dem erstellen Petrinetz kann eine Konformitätsprüfung durchgeführt werden. Hierbei kann ein in der Kommunikationssequenz umfasstes Datenpaket dekodiert und mit der Liste der relevanten Datenpakte verglichen werden. Ist das dekodierte Datenpaket in der Liste der relevanten Datenpakte enthalten, so kann eine zu dem dekodierten Datenpaket zugehörige Transition in dem erstellten Petrinetz gesucht werden. Kann die Transition feuern, so kann die in dem dekodierten Nachrichtenpakte umfasste Nachricht valide sein. Kann die Transition nicht feuern, so kann die in dem dekodierten Nachrichtenpaket umfasste Nachricht invalide sein. Die Konformitätsprüfung kann für alle in der Kommunikationssequenz umfassten Datenpakete durchgeführt werden.

Gemäß einer Ausführungsform kann die Analysevorrichtung 100 ein Anzeigeelement, wie eine Liquid Crystal Display (LCD) -Anzeige, umfassen, mittels welcher die Sollkommunikationssequenz und/oder die Kommunikationssequenz grafisch, insbesondere in Form eines Sequenzdiagramms, angezeigt werden kann. Ferner können mittels des Anzeigeelementes Unterschiede zwischen der Sollkommunikationssequenz und der Kommunikationssequenz in textueller oder grafischer Form dargestellt werden.

Ferner kann die Analysevorrichtung 100 einen Programmierbaren Fehlergenerator und Monitor für Ethernetbasierte Systeme (PROGES) bilden.

Gemäß einer Ausführungsform kann mittels der Analysevorrichtung 100 ferner eine Diagnose der Kommunikationssequenz durchgeführt werden.

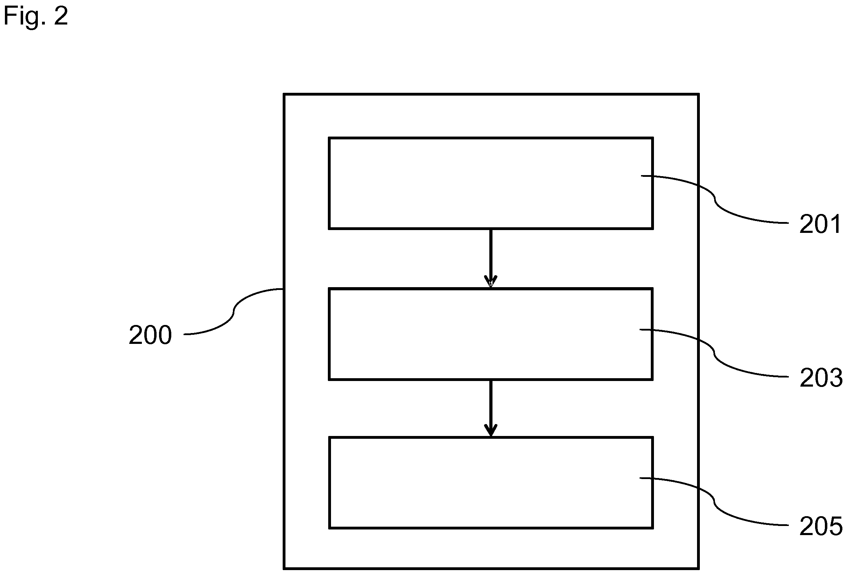

Fig. 2 zeigt ein schematisches Diagramm eines Verfahrens 200 zur Analyse einer Kommunikationssequenz. Das Verfahren 200 umfasst die Verfahrensschritte 201 bis 205.

Das Verfahren 200 zur Analyse einer Kommunikationssequenz umfasst die Verfahrensschritte: Auslesen 201 einer Sollkommunikationssequenz aus einem Speicher; Erstellen 203 eines Petrinetzes in Abhängigkeit von der ausgelesenen Sollkommunikationssequenz mittels eines Prozessors; und Vergleichen 205 der Kommunikationssequenz mit dem erstellten Petrinetz mittels des Prozessors, um die Kommunikationssequenz zu analysieren.

Das Verfahren 200 kann mittels der in Fig. 1 gezeigten Analysevorrichtung 100, mittels eines Computers, mittels eines Rechners, mittels eines Laptops, mittels eines Smartphones oder mittels eines Tablets ausgeführt werden.

Die Kommunikationssequenz kann zwischen Kommunikationsteilnehmern, wie Computern, Feldgeräten oder Steuerungsgeräten, in einem Kommunikationsnetzwerk ausgetauschte Datenpakete umfassen, wobei die Datenpakete zwischen den Kommunikationsteilnehmern ausgetauschte Nachrichten umfassen können. Beispielsweise werden die Datenpakete mittels eines Network-Taps erfasst.

Das Kommunikationsnetzwerk kann ein Process Field Network (Profinet), ein Industrial Ethernet-Netzwerk, ein Ethernet-Netzwerk, insbesondere ein echtzeitfähiges Ethernet-Netzwerk, ein Local Area Network (LAN), ein Wireless Local Area Network (WLAN), das Internet oder ein Telefonnetzwerk sein.

Die Sollkommunikationssequenz kann in Form einer textuellen Sequenz in dem Speicher 101 vorgespeichert sein. Die textuelle Sequenz kann erwartete, zwischen den Kommunikationsteilnehmern ausgetauschte Nachrichten umfassen, welche untereinander oder nacheinander aufgelistet sind. Ferner kann die textuelle Sequenz Fragmente, wie Schleifen oder Alternativen, umfassen, wodurch mittels der Sollkommunikationssequenz ein dynamischer Kommunikationsablauf beschrieben werden kann.

Die Kommunikationssequenz und/oder die Sollkommunikationssequenz kann, insbesondere mittels einer in dem Speicher 101 vorgespeicherten Definitions-Bibliothek, in ein internes Sequenzdiagramm, wie ein Sequenzmodell, umgewandelt werden. Hierbei können einzelne Nachrichten und/oder Fragmente sequentiell miteinander verknüpft werden. Das Sequenzdiagramm kann ein Diagramm nach dem Standard Unified Modeling Language (UML) Sequence Diagram (SD), ein Diagramm nach dem Standard ITU-T Message Sequence Chart (MSC) der Internationalen Fernmeldeunion oder ein aus den beiden vorgenannten Standards abgeleitetes Diagramm sein. Gemäß einer Ausführungsform kann die Sollkommunikationssequenz bereits als Sequenzdiagramm in dem Speicher 101 gespeichert sein.

Zum Erstellen 203 des Petrinetzes in Abhängigkeit von der ausgelesenen Sollkommunikationssequenz kann das Sequenzdiagramm derart in ein Petrinetz umgewandelt werden, dass valide Nachrichten in dem zu analysierenden Kommunikationsnetzwerk durch feuerbare Transitionen modelliert werden. Damit kann jeder Transition mindestens ein auslösendes Ereignis zugeordnet werden. Ferner kann für die Analyse der Kommunikationssequenz eine Liste von relevanten Nachrichten erstellt werden. Eine Umwandlung von Sequenzdiagrammen in Petrinetze ist beispielsweise in der Druckschrift Ribeiro, Ö. R. und Fernandes, J. M.: "Some Rules to Transform Sequence Diagrams into Coloured Petri Nets", 7th Workshop and Tutorial on Practical Use of Coloured Petri Nets and the CPN Tools (CPN 2006), Aarhus, Dänemark, Oktober, 2006, beschrieben, deren Inhalt hiermit durch Bezugnahme aufgenommen wird.

Zum Vergleichen 205 der Kommunikationssequenz mit dem erstellen Petrinetz kann eine Konformitätsprüfung durchgeführt werden. Hierbei kann ein in der Kommunikationssequenz umfasstes Datenpaket dekodiert und mit der Liste der relevanten Datenpakte verglichen werden. Ist das dekodierte Datenpaket in der Liste der relevanten Datenpakte enthalten, so kann eine zu dem dekodierten Datenpaket zugehörige Transition in dem erstellten Petrinetz gesucht werden. Kann die Transition feuern, so kann die in dem dekodierten Nachrichtenpakte umfasste Nachricht valide sein. Kann die Transition nicht feuern, so kann die in dem dekodierten Nachrichtenpakte umfasste Nachricht invalid sein. Die Konformitätsprüfung kann für alle in der Kommunikationssequenz umfassten Datenpakete durchgeführt werden.

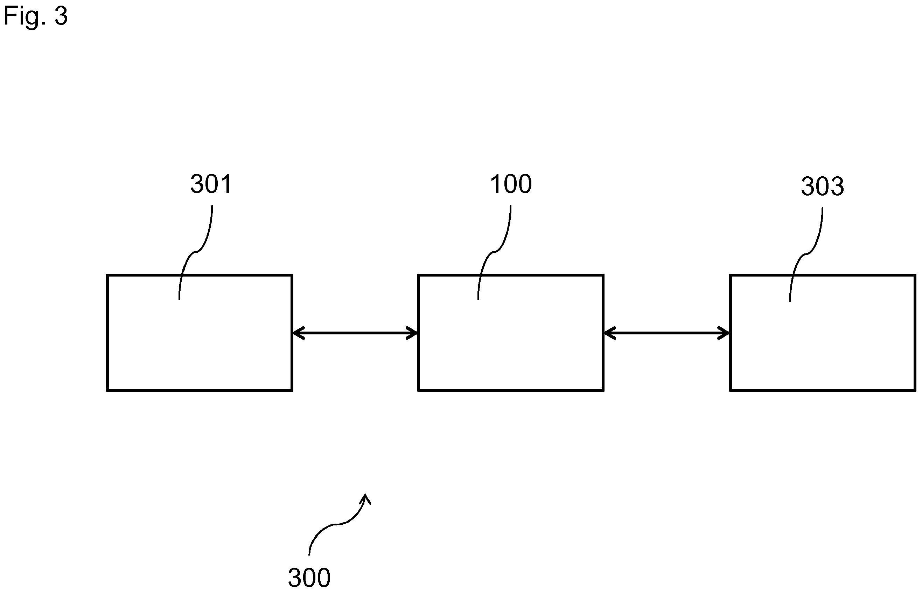

Fig. 3 zeigt eine Anordnung 300 zur Analyse einer Kommunikationssequenz. Die Anordnung 300 umfasst die Analysevorrichtung 100, welche zwischen einem ersten Teilnetzwerk 301 und einem zweiten Teilnetzwerk 303 angeordnet ist. Hierbei können die Analysevorrichtung 100, das erste Teilnetzwerk 301 und das zweite Teilnetzwerk 303 das Kommunikationsnetzwerk bilden. Beispielsweise umfasst das erste Teilnetzwerk 301 einen Profinet-Controller und das zweite Teilnetzwerk 303 ein Profinet-Device.

In der Anordnung 300 ist die Analysevorrichtung 100 direkt in das Kommunikationsnetzwerk eingebracht. Hierdurch kann eine aktive Beeinflussung, insbesondere mittels der Modifizierungsvorschrift, eine Online-Analyse der Kommunikationssequenz und/oder eine Man in the Middle -Analyse oder -Manipulation in dem Kommunikationsnetzwerk durchgeführt werden.

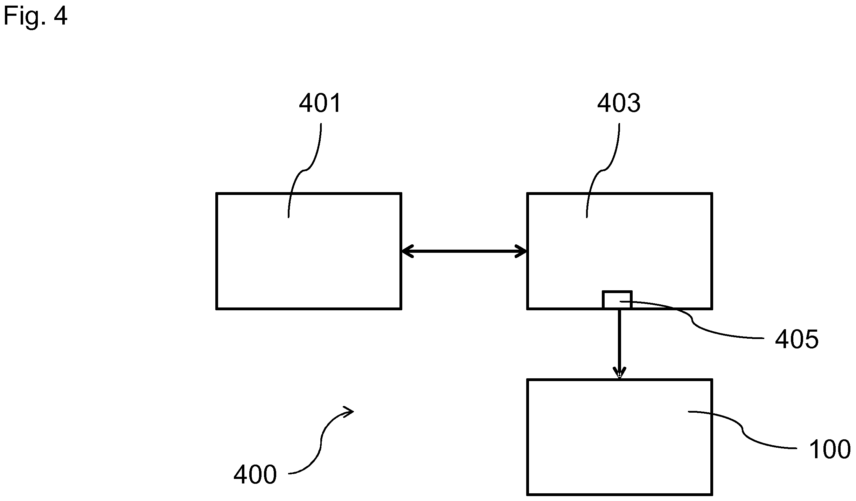

Fig. 4 zeigt eine weitere Anordnung 400 zur Analyse einer Kommunikationssequenz. Die weitere Anordnung 400 umfasst ein Kommunikationsnetzwerk 401, welches mit einem Switch 403 mit einem Mirroring-Port 405 verbunden ist. Ferner umfasst die Anordnung 400 die Analysevorrichtung 100, welche mit dem Mirroring-Port 405 verbunden ist.

Hierbei können die Kommunikationsteilnehmer des Kommunikationsnetzwerks 401 derart über den Switch 403 verbunden sein, dass alle zwischen den Kommunikationsteilnehmern des Kommunikationsnetzwerks 401 ausgetauschten Datenpakete über den Switch 403 übertragen werden. Der Switch 403 kann ferner ausgebildet sein, die über ihn übertragenen Datenpakete zu spiegeln und über den Mirroring-Port 405 auszugeben. Hierdurch kann eine online Analyse der Kommunikationssequenz und/oder ein passives Mitlesen der Kommunikationssequenz durch die Analysevorrichtung 100 ermöglicht werden.

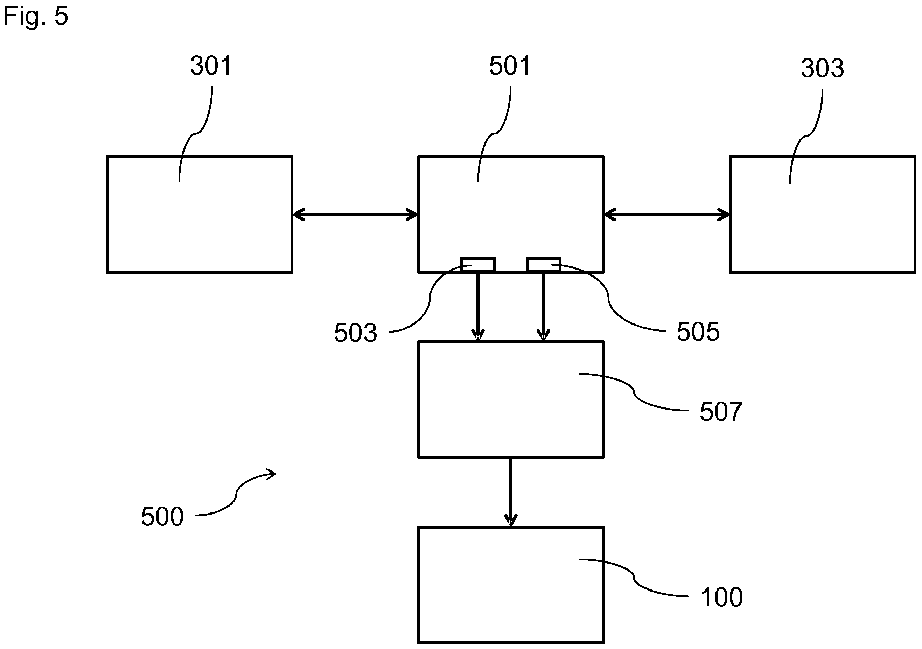

Fig. 5 zeigt eine weitere Anordnung 500 zur Analyse einer Kommunikationssequenz. Die weitere Anordnung 500 umfasst die Analysevorrichtung 100, das erste Teilnetzwerk 301, das zweite Teilnetzwerk 303 und einen zwischen den jeweiligen Teilnetzwerken 301, 303 angeordneten Network-Tap 501. Der Network-Tap 501 umfasst eine Tx-Schnittstelle 503 zum Ausgeben von auf einem Transmitter-Pfad erfassten Datenpaketen und einer Rx-Schnittstelle 505 zum Ausgeben von auf einem Receiver-Pfad erfassten Datenpaketen. Ferner umfasst die Anordnung 500 einen Merger 507, wie ein Gerät zum Mergen, welcher mit der Tx-Schnittstelle 503 und der Rx-Schnittstelle 505 verbunden ist, die von der Tx-Schnittstelle 503 und der Rx-Schnittstelle 505 empfangenen Datenpakete oder Daten kombiniert, insbesondere verschmilzt, und an die Analysevorrichtung 100 überträgt. Hierdurch kann eine online Analyse der Kommunikationssequenz und/oder ein passives Mitlesen der Kommunikationssequenz durch die Analysevorrichtung 100 ermöglicht werden.

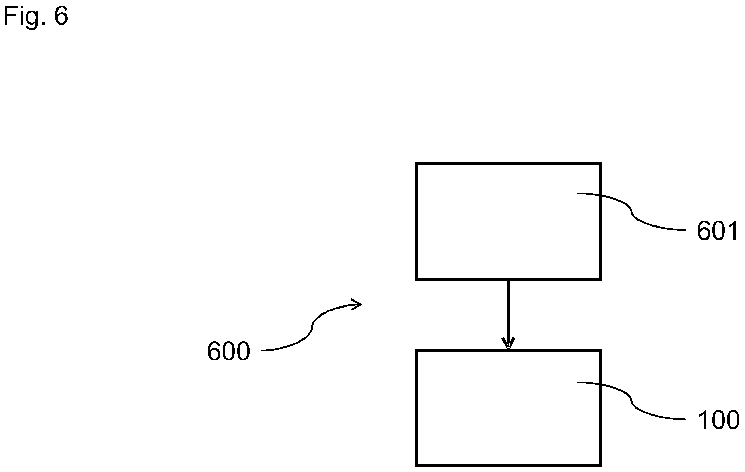

Fig. 6 zeigt eine weitere Anordnung 600 zur Analyse einer Kommunikationssequenz. Die weitere Anordnung 600 umfasst einen weiteren Speicher 601 und die Analysevorrichtung 100. Die Kommunikationssequenz kann in dem weiteren Speicher 601, beispielsweise in Form einer PCAP-Datei oder einer PCAP-Aufzeichnung gespeichert sein, und an die Analysevorrichtung 100 übermittelt werden. Beispielsweise wird die Kommunikationssequenz von dem weiteren Speicher 601 in den Speicher 101 der Analysevorrichtung 100 kopiert. Hierdurch kann eine Offline-Analyse der Kommunikationssequenz und/oder ein passives Mitlesen durch die Analysevorrichtung 100 ermöglicht werden.

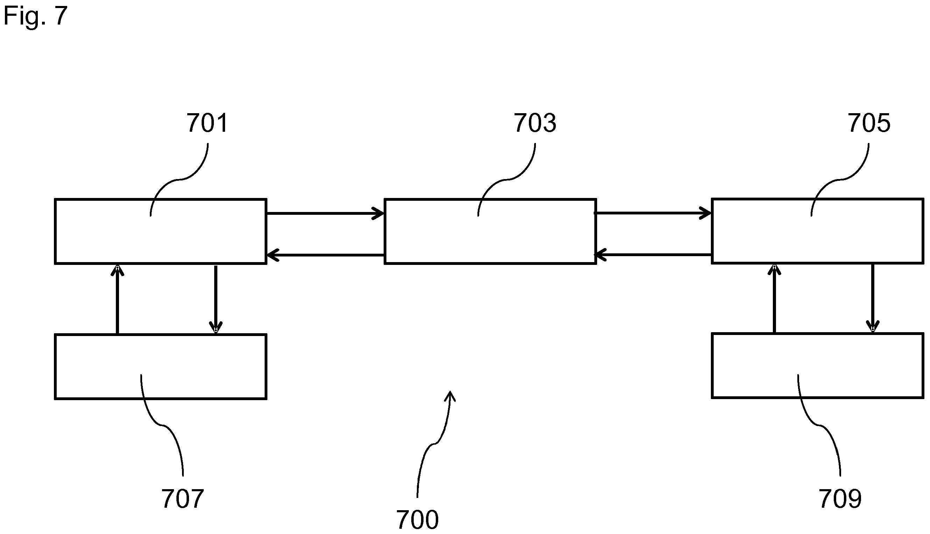

Fig. 7 zeigt ein schematisches Diagramm 700 zur Datenverarbeitung in der Analysevorrichtung 100. Die Anordnung 700 umfasst die jeweiligen Datenverarbeitungsmodule 701 bis 709.

In dem ersten Datenverarbeitungsmodul 701 kann eine Dekodierung eines Datenpakets durchgeführt werden, um eine Nachricht zu erhalten, und/oder eine Kodierung einer Nachricht durchgeführt werden, um ein Datenpaket zu erhalten. Ferner kann in dem zweiten Datenverarbeitungsmodul 703 eine Aufbereitung durchgeführt werden, um eine Nachricht in ein Ereignis und/oder ein Ereignis in eine Nachricht umzuwandeln. In dem dritten Datenverarbeitungsmodul 705 kann ferner eine Konformitätsprüfung durchgeführt werden. Ferner kann das vierte Datenverarbeitungsmodul 707 eine Daten-Schnittstelle umfassen, über welche Datenpakte mit dem ersten Datenverarbeitungsmodul 701 ausgetauscht werden können. Hierzu kann das vierte Datenverarbeitungsmodul 707 eine Kommunikationsschnittstelle, wie eine Netzwerkkarte oder eine Mehrzahl von Netzwerkkarten, und/oder den Speicher 101 mit einer Aufzeichnung von Datenpaketen umfassen. Das fünfte Datenverarbeitungsmodul 709 kann eine Benutzerschnittstelle zur Parametrierung und Prüfung der Konformitätsprüfung in dem dritten Datenverarbeitungsmodul 705 durch einen Benutzer umfassen.

Die Analysevorrichtung 100 kann die jeweiligen Datenverarbeitungsmodule 701 bis 709 zur Analyse einer Kommunikationssequenz in einem Profinet-Netzwerk umfassen. Dies liegt an den zu analysierenden Netzwerkdaten, welche zwischen verschiedenen Repräsentationsformen umgewandelt werden. Auf unterster Ebene besteht mit PCAP eine einheitliche Schnittstelle zu den rohen Netzwerkdaten. Unabhängig davon, ob diese von einer Aufzeichnung oder einer Netzwerkkarte stammen, sind sie als Bytestrom einlesbar. Bei der Dekodierung kann es erforderlich sein, alle Protokollspezifikationen zu beachten, die für die zu überwachende Kommunikation in Frage kommen. Nach dem OSI-Modell können die Datenpakete Schicht für Schicht dekodiert werden, beispielsweise nach der ITU-T Empfehlung X.200. Für die betrachteten Netzwerke findet sich auf unterster Ebene das Ethernet-Protokoll. Über eine ID oder Heuristik ist die nächst höhere Schicht identifizierbar. Dazu gehören im Fall von Profinet unter anderem IP, UDP und RPC. Auf höchster Ebene befindet sich letztendlich eine Profinet-Schicht - entweder für zyklische oder azyklische Daten. Daneben können aber auch andere Pakete ohne Profinet-Schicht relevant sein, beispielsweise Datenpakete mit ARP-Protokoll zur IP-Vergabe. Letztendlich ist für alle relevanten Protokolle eine De- und Kodierung implementiert. Im Falle einer Fragmentierung ist eine Nachricht auf mehrere Datenpakete aufgeteilt. Diese werden gesammelt und zu einer vollständigen, dekodierten Nachricht zusammengesetzt. Auf oberster Ebene besteht die Konformitätsprüfung, die ein Modell des Netzwerk-Sollverhaltens beinhaltet. Dieses kann vor Start der Diagnose aus den Vorgaben des Benutzers automatisch erstellt werden. Um dieses Diagnosemodul und die Beschreibung des Sollverhaltens möglichst protokollunabhängig zu halten, wird auf dieser Ebene nur mit abstrakten Ereignissen gearbeitet. Zwischen diesen Ebenen sorgt eine Aufbereitung dafür, dass rohe Datenpakete zu Nachrichten gewandelt und schließlich als Ereignisse interpretiert werden können. Dabei kann die Abstraktion der Datenrepräsentationen steigen und die Komplexität der Datenrepräsentationen sinken.

Für den Fall, dass die Analysevorrichtung 100, wie ein Diagnosegerät, direkt in den Bus eingebracht wird, besteht auch ein Rückkanal: Ereignisse werden wieder zu Nachrichten und schließlich zu Datenpaketen kodiert. Neben einer einfachen Weiterleitung kann die Manipulation einzelner Parameter möglich sein. Während der Kodierung werden dann davon abhängige Parameter wie Prüfsummen und Füllbytes angepasst.

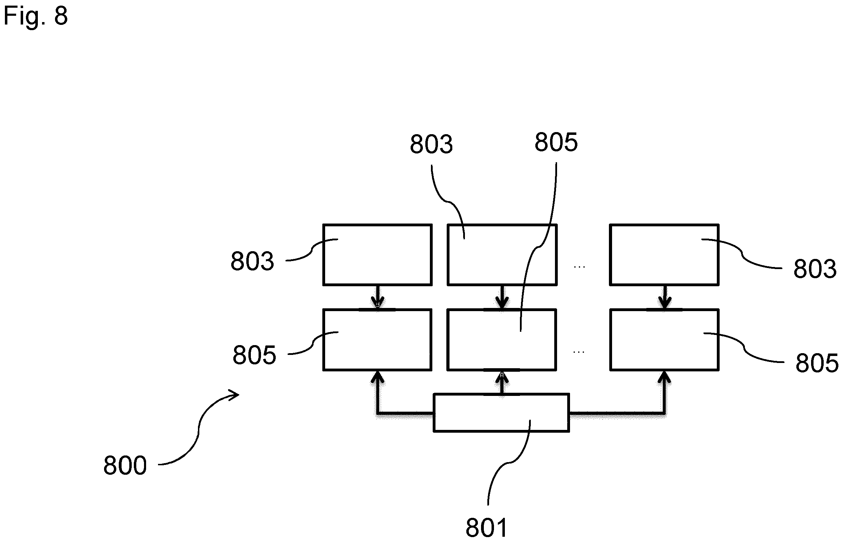

Fig. 8 zeigt ein schematisches Diagramm 800 zum Vergleichen einer Kommunikationssequenz 801 mit einer Sollkommunikationssequenz 803. In dem Diagramm 800 ist eine Mehrzahl von Sollkommunikationssequenzen 803 abgebildet, welche jeweils ein Sollverhalten repräsentieren. Ferner ist die Mehrzahl von Sequenzmodellen 805 abgebildet, wobei jeweils eine Sollkommunikationssequenz 803 in jeweils ein Sequenzmodell 805 umwandelbar ist. Ferner kann die Kommunikationssequenz 801 mit den Sequenzmodellen 805 gegen voneinander unabhängige, spezialisierte Sollverhalten getestet werden. Hierzu kann die Kommunikationssequenz 801 Netzwerkdaten umfassen.

Das Ist-Verhalten des untersuchten Kommunikationsnetzwerkes wird mit einem Sollverhalten abgeglichen. Es besteht die Frage, welche Form der Modellierung am geeignetsten ist. Denkbar wäre zwar eine einzelne Darstellung, die bereits das gesamte Systemverhalten für jeden Anwendungsfall vorschreibt. Dies entspräche einer Einheit aller Spezifikationen der beteiligten Geräte und Protokolle, z. B. direkt aus Handbüchern und Datenblättern. Offensichtlich birgt es bereits eine enorme Komplexität, eine vollständige Spezifikation in einem passenden Format für den Vergleich zu speichern. Diese würde durch die Kombination aller beteiligten Spezifikationen nochmals steigen. Und unter Umständen sind beim entwicklungsbegleitenden Testen Funktionen zu prüfen, die noch nicht in einer Dokumentation erfasst sind.

Daher ist als erstes die Komplexität der Beschreibung eines Sollverhaltens zu verringern. Gemäß einer Ausführungsform kann das Kommunikationsnetzwerk gegen die gesamte Spezifikation getestet werden. Gemäß einer weiteren Ausführungsform können nacheinander einzelne, kleine Tests angestoßen und jedes Mal das Netzwerkverhalten diagnostiziert werden. Dies resultiert in separaten, spezialisierten Testfällen bzw. Sollverhalten, wie in Fig. 8 dargestellt ist. Ein Sollverhalten entspricht einer Ablaufbeschreibung von validen Ereignissen. Es ist vom Benutzer schnell erstell- und anpassbar.

Die nächste Frage ist, wie ein einzelnes Sollverhalten implementiert werden kann. Es bestehen folgende Anforderungen:
- Einfache Parametrierung
- Übersichtliche Darstellung
- Nachrichtenaustausch zwischen Sendern und Empfängern darstellen
- Validität von Ereignissen prüfen

Da die einfache Bearbeitung durch Benutzer vorteilhaft ist, kann eine komplexe Metasprache wie XML vermieden werden. Stattdessen kann eine grafische oder äquivalente textuelle Eingabemethode vorteilhaft sein. Von Vorteil sind natürlich genormte Darstellungen: Sie sind eventuell bereits beim Tester bekannt, durchdacht, erprobt und es existieren ggf. Tools zur Generierung und Verarbeitung.

Ein weit verbreiteter Standard für diverse Diagrammtypen ist die Unified Modeling Language (UML). Sie wird von der ISO als auch der Object Management Group genormt, siehe beispielsweise Rupp, C.; Queins, S.; Zengler, B.: "UML 2 glasklar", Carl Hanser Verlag, München / Wien, 2007. Ein Vorteil ist, dass zu einer Problematik verschiedene Diagramme erstellt und miteinander verknüpft werden können. Die UML definiert zunächst Struktur- und Verhaltensdiagramme. Ein Netzwerkverhalten kann als zeitliche Ablaufbeschreibung von Ereignissen dargestellt werden. Daher eignen sich insbesondere die Verhaltensdiagramme, und hier besonders das Aktivitäts-, Sequenz- und Kommunikationsdiagramm. Das zu wählende Diagramm soll eine Netzwerkkommunikation nachbilden, bei der diskrete Nachrichten von einem Kommunikationspartner zu einem anderen versendet werden. In einem Aktivitätsdiagramm sind Sender und Empfänger nicht explizit dargestellt. Dies ist dagegen in Sequenz- und Kommunikationsdiagrammen über sogenannte Lebenslinien möglich. Aber erst in Sequenzdiagrammen (UML SDs) findet eine vertikale Anordnung von Ereignissen an einer Zeitachse statt. Daher kann dieses Diagramm gewählt werden, um Testfälle vorrangig als chronologische Abfolge von Nachrichten darzustellen, die zwischen Kommunikationspartnern ausgetauscht werden.

Die UML Sequenzdiagramme wurden stark von den Message Sequence Charts (MSCs) beeinflusst. Diese wurden von der ITU-T entworfen und genormt und besitzen eine äquivalente textuelle und grafische Syntax, beispielsweise nach der ITU-T Empfehlung Z.120. Für den Entwurf der Analysevorrichtung 100, wie eines Netzwerkdiagnose-Werkzeuges, kann es generell einfacher sein, eine textuelle Beschreibung von Sollverhalten über Parser einzulesen und zu verarbeiten, als extra eine Komponente zum grafischen Editieren zur Verfügung zu stellen. Daher wurde die Grammatik textueller MSCs daraufhin untersucht, der Parametrierung des Diagnosewerkzeugs zu dienen.

Weiterhin besitzen MSCs als auch UML SDs die Möglichkeit, über spezielle Konstrukte den Ereignisfluss kontextsensitiv zu steuern: Inline Expressions (MSCs) bzw. Kombinierte Fragmente (UML SDs). Diese Konstrukte sind beliebig verschachtelbar. Hierbei können alle auf ihren Nutzen in Profinet-basierten Netzwerken hin untersucht und die geeignetsten für die vorgesehene Implementierung ausgewählt werden. Von den Inline Expressions können dies die Folgenden sein:
- Alternativen: Beschreibung von Abläufen, von denen nur einer eintreten kann. Zum Beispiel ist über eine ARP-Nachfrage prüfbar, ob eine gewisse IP-Adresse bereits vergeben ist. Entweder, ein Device besitzt sie bereits und antwortet, oder nach einem Timeout wird die IP erst vergeben.
- Optionen: Beschreibung von Abläufen, die eintreten können, aber nicht müssen. Dies ist bei Bedarf von einer booleschen Bedingung abhängig machbar. Ein Beispiel ist die Parametrierung eines Profinet-Devices über Write-Nachrichten.
- Parallelen: Für Ereignisgruppen, die unabhängig und in beliebiger Reihenfolge ablaufen können. Dazu gehört beispielsweise der Verbindungsaufbau von einem Profinet-Controller zu mehreren Devices.
- Schleifen: Abläufe treten wiederholt auf. Dabei ist angebbar, wie oft dies mindestens und höchstens geschehen soll. Auch hiermit lässt sich die Parametrierung eines Profinet-Devices über Write-Nachrichten modellieren.

Die UML hat im Grunde alle im MSC-Standard beschriebenen Inline Expressions als kombinierte Fragmente übernommen. Es können jedoch zusätzliche Fragmente eingeführt werden, von denen beispielsweise folgende für die Softwareimplementierung gewählt wurden:
- Consider: Bestimmte Nachrichten hervorheben. Tauchen diese nicht in der vom Consider umschlossenen Modellierung auf, treten aber im Netzwerk auf, so widerspricht das Systemverhalten der Modellierung und gilt als fehlerhaft. Alle anderen Nachrichten werden implizit ignoriert. Letztendlich lässt sich damit die Validität von Ereignissen eingrenzen. Beispielweise lassen sich hiermit nach einem erfolgreichen Profinet-Verbindungsaufbau bestimmte Alarm-Nachrichten verbieten.
- Ignore: Bestimmte Nachrichten ignorieren - das Gegenteil von Consider.

Letztendlich bieten MSCs als auch UML SDs Vorteile, die gemeinsam genutzt werden können. Als Hauptvorbild dienen nach wie vor UML SDs, weshalb ihre Begriffe wie Fragmente verwendet werden. Zusätzlich kann eine Grammatik ähnlichem textuellem MSC hinzugefügt werden. Diese kann dahingehend verändert werden, dass sie noch übersichtlicher und anwenderfreundlicher wird. Hierfür kann eine eigene domänenspezifische Sprache (DSL) geschaffen werden.

Ein Nachteil von textuellem MSC ist, dass Nachrichten nicht als einheitliche Ereignisse angesehen werden, die von einem Sender zu einem Empfänger übertragen werden. Sie werden stattdessen in Sende- und Empfangsereignis aufgeteilt. Dies sorgt zunächst für eine komplexere Syntax, da für jede Netzwerknachricht zwei Ereignisse zu notieren sind. Weiterhin ermöglicht es der Standard, nur eines der beiden Ereignisse zu notieren. Jedoch führt eine Nachricht, die z. B. empfangen, aber nie gesendet wird, zu einem Deadlock. Daher werden in der DSL Sende- und Empfangsereignis als untrennbare Einheit notiert. Dies modelliert auch besser eine Netzwerkdiagnose: Hier sind Sende- und Empfangsereignis von Datenpaketen auf dem Bus nicht unabhängig voneinander messbar.

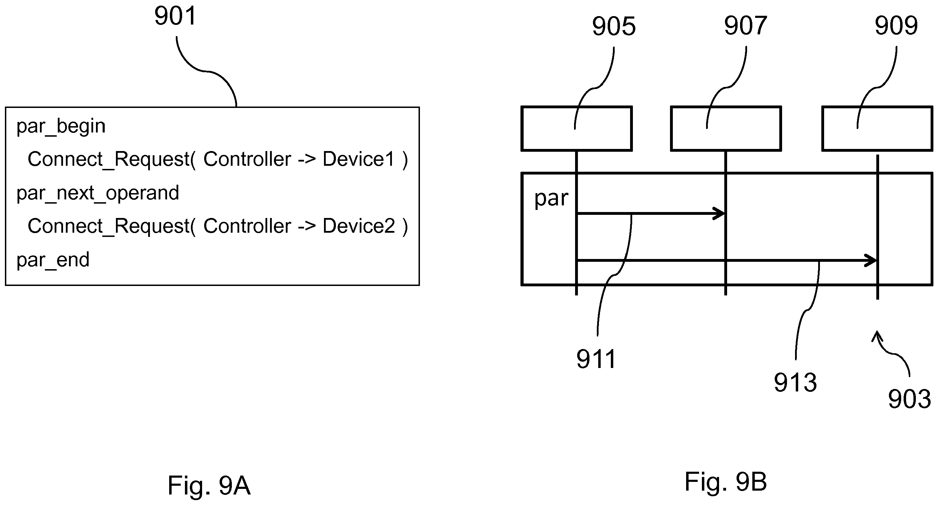

Fig. 9A zeigt eine Darstellung einer Sollkommunikationssequenz 803 in Form einer textuellen Sequenz 901. Ferner zeigt Fig. 9B eine Darstellung der in Fig. 9A gezeigten textuellen Sequenz 901 als Sequenzdiagramm 903.

Die textuelle Sequenz 901 beschreibt einen Testfall und eine gleichzeitige Programmierung der Analysevorrichtung 100 über die neue Sequenzbeschreibungssprache. In dem Sequenzdiagramm 903 sind ein erster Kommunikationsteilnehmer 905 "Controller", ein zweiter Kommunikationsteilnehmer 907 "Device 1" und ein dritter Kommunikationsteilnehmer 909 "Device 2" abgebildet. Ferner sendet der erste Kommunikationsteilnehmer 905 eine erste Nachricht 911 "Connect Request" an den zweiten Kommunikationsteilnehmer 907 und eine zweite Nachricht 913 "Connect Request" an den dritten Kommunikationsteilnehmer 909. Der erste Kommunikationsteilnehmer 905 kann hierbei in beliebiger Reihenfolge die Verbindung mit dem zweiten Kommunikationsteilnehmer 907 und dem dritten Kommunikationsteilnehmer 909 aufbauen.

Die DSL kann in zwei Bereiche aufgeteilt werden: Einer erlaubt dem Benutzer die Erstellung von Testfällen bzw. Sollverhalten in der Form von Sequenzen. Es wird auf die Bezeichner abstrakter Ereignisse zurückgegriffen, deren Definition zunächst verborgen bleibt. Fig. 9A und Fig. 9B zeigen das Beispiel eines Profinet-Controllers, der gleichzeitig zu zwei Devices ein Connect Request senden soll, um mit einem Verbindungsaufbau zu beginnen. Über Schlüsselwörter werden Fragmente begonnen, geschlossen und in Operanden unterteilt. Nachrichten bzw. Ereignisse an sich werden durch ihren Bezeichner sowie Bezeichner von Sender und Empfänger in Klammern angegeben. Hier zeigt sich die Untrennbarkeit von Sende- und Empfangsereignis der gewählten Darstellungsform.

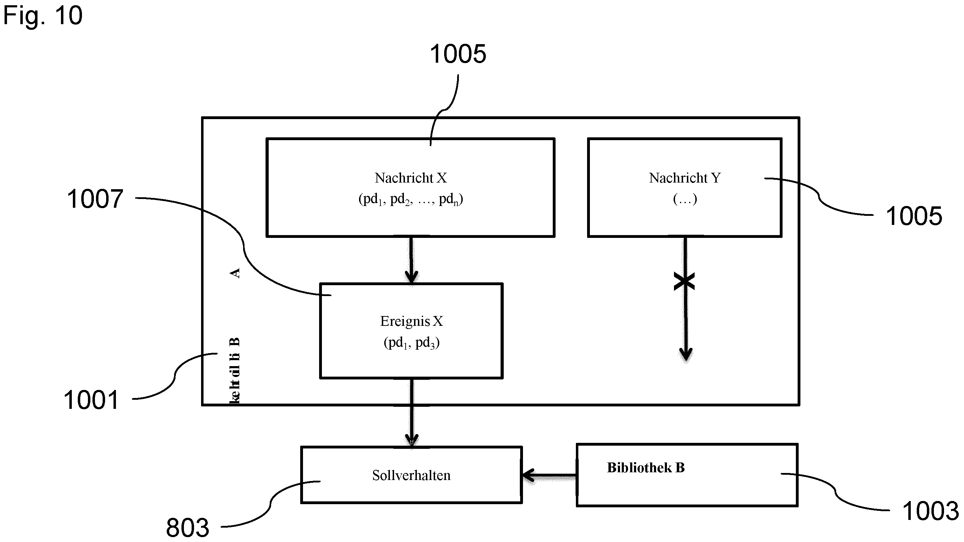

Fig. 10 zeigt ein schematisches Diagramm zum Beschreiben der Sollkommunikationssequenz 803. Die Sollkommunikationssequenz 803 kann ein Sollverhalten repräsentieren. Das Sollverhalten kann auf die jeweiligen Bibliotheken 1001, 1003 zurückgreifen, in denen Nachrichten 1005 und Ereignisse 1007 sowie Kommunikationspartner definiert werden. Dies geschieht über einfache Bezeichner sowie als relevant angesehene Parameter pdₓ.

Die eigentliche Definition von Ereignissen, Sendern und Empfängern geschieht erst im zweiten Bereich: Den jeweiligen Bibliotheken 1001, 1003, wie Definitions-Bibliotheken. In diesen lassen sich beliebige Netzwerknachrichten, aber auch beteiligte Kommunikationspartner über entsprechende Parameter definieren, wie Fig. 10 zeigt. Beispielweise genügt für Controller und Devices die Angabe der MAC-Adresse aus dem Ethernet-Layer, um sie zuverlässig zu identifizieren. Eine Profinet-Nachricht wie ein Connect Request lässt sich bereits über Packet Type und Operation Number im DCERPC- bzw. Profinet IO-Layer beschreiben. Durch diese Festlegung auf die nötigsten Parameter geschieht die Abstraktion von komplexen Nachrichten zu einfachen Ereignissen. Ebenfalls ist eine Fokussierung auf nur für einen Testfall nötige Nachrichten möglich. Die meisten Nachrichten-Definitionen sind nur einmalig zu erstellen und sind daraufhin beliebig von Sollverhalten verwendbar. Lediglich diese Sollverhalten sind für jeden Testfall neu zu erstellen bzw. anzupassen.

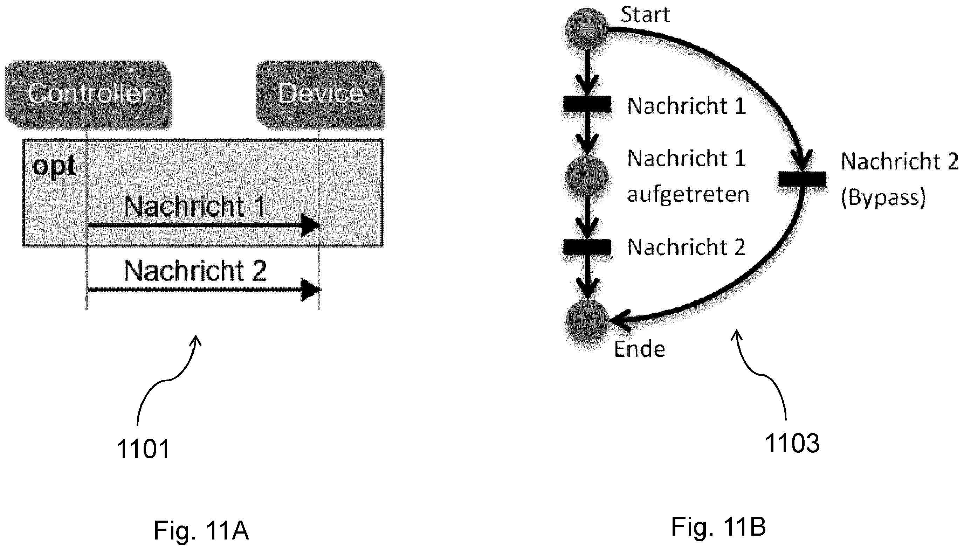

Fig. 11A zeigt ein Sequenzdiagramm 1101 und Fig. 11B zeigt ein dem in Fig. 11A gezeigten Sequenzdiagramm 1101 zugeordnetes Petrinetz 1103. Hierbei weist das Petrinetz 1103 ein umgewandeltes Options-Fragment auf.

Aus einem realen Netzwerk oder einer Aufzeichnung erhält die Diagnose einen sequentiellen Ereignisstrom, aus dem jedes Ereignis separat betrachtet werden kann und zu valideren ist. Ein Sollverhalten ist jedoch nur im einfachsten Fall eine sequentielle Abfolge von Ereignissen. Über Fragmente wie Alternativen und Parallelen sind mitunter mehrere Ereignisse zur gleichen Zeit valide. Wird ein Ist-Ereignis unter diesen gefunden, so gilt auch das Systemverhalten als korrekt. Die Schwierigkeit besteht darin, zu einem bestimmten Zeitpunkt alle validen Ereignisse im Sollverhalten zu finden und diese Liste nach Eintreffen eines Ist-Ereignisses zu aktualisieren. Dies kann sehr schnell geschehen, um die Echtzeitanforderungen von Protokollen wie Profinet weitgehend einhalten zu können. Letztendlich ist eine klar definierte Notation erforderlich, um den aktuellen Zustand speichern zu können. Sequenzdiagramme dienen jedoch lediglich der formalen Definition aller validen Abläufe. Eine Aktualisierung durch konkret eintretende Ereignisse ist in keinem der betrachteten Standards vorgesehen.

Eine Möglichkeit wäre, grafisch als auch im internen Datenmodell die eingetretenen Ereignisse zu markieren. Für eine Suche nach nun validen Ereignissen können zusätzlich Pfade beschreibbar sein, die abgelaufen werden können. In einem ersten Ansatz wird das Sollverhalten in eine XML-Struktur überführt und abgearbeitete Knoten markiert. Durch die Möglichkeit der Fragment-Verschachtelung und Schleifen in Sequenzdiagrammen können die Suchpfade zu nächsten validen Ereignisknoten jedoch lang und kompliziert werden.

Ferner können diese Suchpfade über eine Baumstruktur bzw. gerichtete Graphen dargestellt werden: Ausgehend von einem Zustand können Ereignisse zurück zum selben Zustand oder zu neuen Zuständen führen. Auch hierfür gibt eine genormte Darstellungsformen. Die einfachste ist ein Bedingungs-Ereignis-Netz, siehe beispielsweise Priese, L; Wimmel, H.: "Petri-Netze", 2. Auflage, Springer, Berlin, 2008. Diese Graphen erlauben eine bessere Modellierung des Netzwerkes als verteiltes System. Außerdem bieten sie bessere Simulations- und Analysemöglichkeiten, z. B. bei der Suche nach Deadlocks. Über Marken sind die verteilten Zustände speicherbar. Bedingungs-Ereignis-Netze sind jedoch für Menschen meist unübersichtlicher als bspw. Sequenzdiagramme 1101. Daher kann es vorteilhaft sein, Sequenzdiagramme 1101 für die formale Verhaltensbeschreibung vor einer Diagnose zu verwenden und sie als übersichtliche Schnittstelle zwischen Nutzer und Werkzeug einzusetzen. Gerichtete Graphen hingegen können als interne Modelle während der Diagnose verwendet werden. Hierzu kann eine automatische Modellumwandlung vor Diagnosestart durchgeführt werden.

Hierfür wurde eine automatische Modellgenerierung entworfen, die die Sequenzmodelle vom Benutzer in interne, spezielle Graphennetze überführt. Konkret handelt es sich um angepasste Petrinetze 1103, die aus Stellen und Transitionen bestehen. Neben der Validierung können feuernde Transitionen Aktionen auslösen. So ist durch ein im Bus eingebrachtes Diagnosegerät, wie die Analysevorrichtung 100, die Manipulation von Nachrichten vor ihrer Weiterleitung möglich.

Die Überführung von Sequenzdiagrammen 1101 in Petrinetze 1103 ist in der Druckschrift Ribeiro, Ö. R. und Fernandes, J. M.: "Some Rules to Transform Sequence Diagrams into Coloured Petri Nets", 7th Workshop and Tutorial on Practical Use of Coloured Petri Nets and the CPN Tools (CPN 2006), Aarhus, Dänemark, Oktober, 2006, beschrieben. In dieser Druckschrift wird jedoch davon ausgegangen, dass das Eintreffen von Ereignissen stets vorab entscheidbar ist, beispielsweise über die Auswertung boolescher Bedingungen. Als Resultat werden diese Entscheidungen auch über Transitionen modelliert, z. B. dem Betreten eines Zweiges einer Alternative. Hier wurde jedoch untersucht, wie eine vage Beschreibung durch Weglassen von Bedingungen ermöglicht werden kann. Während dies in dem Sequenzdiagramm 1101 noch sehr einfach geschieht, führt es im Petrinetz 1103 zu mehrere möglichen Wegen. Daher erfolgt die Entscheidung über den zu durchlaufenden Pfad nicht a priori, sondern erst durch den tatsächlichen Datenstrom von Netzwerkereignissen. Es können neue Vorschriften zur Überführung in ein Petrinetz 1103 untersucht werden, die einen minimalen Graph bilden: Transitionen stehen ausschließlich für mögliche Nachrichten auf dem Datenbus. Von jeder Stelle gehen damit alle in diesem Zustand validen Ereignisse als Transitionen aus und sind sofort auffindbar. Boolesche Bedingungen werden direkt mit diesen verknüpft und sind zusätzlich zu den Vor- und Nachbedingungen der Markenbelegung auszuwerten.

Ein Beispiel, das die neue Struktur zeigt, ist ein Optionales Fragment. Erst das Eintreffen eines Ereignisses soll über den zu durchlaufenden Graphenpfad entscheiden. Daher kann von der Stelle vor dem Fragment bereits das Ereignis nach dem Fragment sichtbar bzw. als Transition direkt verknüpft sein. Dies wird über eine Art Bypass realisiert, wie in Fig. 11B gezeigt.

Für die Diagnose realer Netzwerke ist eine letzte Ergänzung nötig. Formale Systemmodellierungen über Sequenzdiagramme 1101 und Petrinetze 1103 gehen meist davon aus, dass alle Ereignisse modellierbar sind. Oder, sie nehmen einen auf die relevanten Ereignisse vorgefilterten Datenstrom an. Die Analysevorrichtung 100 wird jedoch mit ungefilterten Netzwerkdaten gespeist. In diesen werden viel mehr irrelevante, als für einen Testfall relevante Daten auftreten. Zunächst kann festgelegt werden, wie das Petrinetz 1103 auf die Irrelevanten zu reagieren hat. Es wurde zuvor bestimmt, alle validen Ereignisse über Transitionen abzubilden. Da aber auch irrelevante Datenpakete zu ignorieren und damit implizit valide sind, kann auch für sie eine Transition existieren. Diese wird Filter-Transition genannt. Ihr wird meist ein sogenanntes Unbekanntes Ereignis zugeordnet. Dieses wird von der Aufbereitung immer dann an das Diagnosemodul, wie ein Diagnosemodul der Analysevorrichtung, hochgereicht, wenn eine Netzwerknachricht nicht über die Definitionsbibliotheken identifizierbar ist. Eine Filter-Transition wird implizit an allen Vorstellen im Petrinetz 1103 hinzugefügt. Beim Feuern nimmt sie von diesen Stellen eine Marke und legt sie sogleich wieder zurück. So werden standardmäßig alle nicht definierten und damit irrelevanten Ereignisse ignoriert und trotzdem als valide angesehen. Die Erstellung dieser speziellen Transitionen wird erst über Consider- oder Ignore-Fragmente geändert.

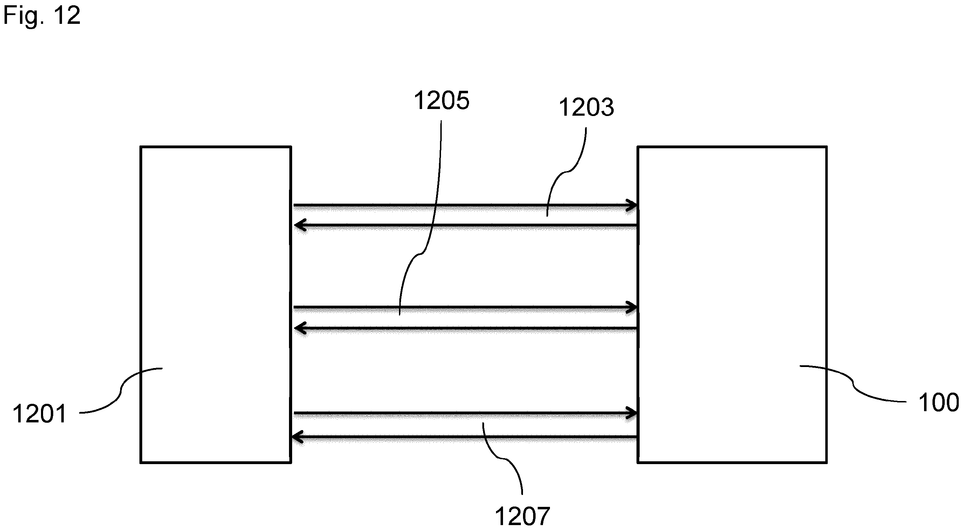

Fig. 12 zeigt einen Kommunikationsverlauf zwischen einem Steuergerät 1201 zum Steuern der Analysevorrichtung 100 und der Analysevorrichtung 100. Der Kommunikationsverlauf umfasst einen ersten Kommunikationsschritt 1203 "Diagnose starten", einen zweiten Kommunikationsschritt 1205 "Diagnoseergebnis vorhanden?" und einen dritten Kommunikationsschritt 1207 "Diagnoseergebnis abholen". Hierbei kann das Steuergerät 1201 einen Diagnose-Client bilden und die Analysevorrichtung 100 kann ein Diagnosegerät als Server bilden.

Die oben beschriebenen Mechanismen können in einem Softwarewerkzeug implementiert werden. Dieses lässt sich auf einem Computer oder der Analysevorrichtung 100 installieren und ausführen. Es existieren zwei Einsatzmöglichkeiten: Zum einen die Prüfung von Netzwerk-Aufzeichnungen im sogenannten Offline-Modus. Es kann das PCAP-Format unterstützt werden, welches auch von Programmen wie Wireshark und Tcpdump genutzt wird. Zum anderen die Prüfung von Netzwerken zur Laufzeit im Online-Modus. Die Analysevorrichtung 100 wird in das Netzwerk eingebracht - entweder über eine Netzwerkkarte zur reinen Diagnose, oder über zwei Karten zur Diagnose und optionalen Manipulation. Unabhängig vom Betriebsmodus können folgende Schritte zur Diagnosevorbereitung durchgeführt werden:
- Benutzer entwirft Testfall als textuelle Sollsequenz
- Bei Bedarf Einbinden vorhandener Bibliotheken, z. B. Definitionen von Profinet-Nachrichten wie einem Connect Request
- Bei Bedarf Erstellen und Einbinden neuer Bibliotheken oder Anpassen / Spezialisieren bestehender
   ∘ Ggf. MAC-Adressen der beteiligten Kommunikationspartner anpassen
   ∘ Ggf. neue Nachrichten aus einzelnen Parametern oder Variablen definieren
- Diagnose-Quelle auswählen: PCAP-Aufzeichnung, oder eine bis zwei Netzwerkkarten

Startet der Benutzer die Diagnose über die Programmoberfläche, so können folgende Punkte abgearbeitet werden:
- Aus textuellem Sollverhalten ein internes Sequenzmodell erstellen
- Daraus automatisch Petrinetz 1103erstellen und nach validen Ereignissen im Startzustand suchen
- Grafiken beider Modelle anzeigen
- Prüfung eines abstrakten Netzwerk-Ereignisses im Petrinetz 1103: Kann eine Transition feuern?
   ∘ Ja: Marken bewegen, Liste valider Ereignisse erneuern. Online-Modus: Originale, unkodierte Nachricht weiterleiten.
   ∘ Nein: Diagnose abbrechen.
- Übereinstimmungen und Abweichungen werden in einem Text-Log, als auch grafisch in einem Sequenzdiagramm protokolliert
- Diagnoseergebnis liegt vor: Eingetretene Ereignisse oder Unterschiede zwischen Soll und Ist grafisch hervorheben

Gemäß einer Ausführungsform kann das Diagnoseergebnis in dem Analysebericht umfasst sein.

Eine Diagnose kann solange aktiv bleiben, bis sie vom Benutzer abgebrochen wird oder ein Sollverhalten erfüllt bzw. verletzt wurde. Wurde im Offline-Modus die Aufzeichnung vollständig abgearbeitet, so gilt sie ebenfalls als beendet. Wurden in diesem Fall nicht alle modellierten Pflicht-Ereignisse gefunden, gilt die Diagnose als fehlerhaft. Für den aktuellen Testfall wird das Diagnoseergebnis notiert und ggf. der nächste Testfall angestoßen. Um diesen Vorgang zu automatisieren, kann eine weitere Anwendung zur Fernsteuerung verwendet werden. Es handelt sich um einen einfachen Client, wie das Steuergerät 1201, der sich über TCP mit der Hauptanwendung verbindet, dort die Diagnose anstößt und bei Bedarf nach dem Diagnosestatus und dem Ergebnis fragt. Dies ist in Fig. 12 dargestellt. Die Befehle und Antworten werden über das zu diagnostizierende Netzwerk ausgetauscht.

Wurde die Analysevorrichtung 100 über zwei Netzwerkkarten direkt in den Bus eingebracht, ist auch eine Protokollmanipulation möglich. Solch eine wird über ein entsprechendes Steuerwort im Sollverhalten angestoßen. Beispielsweise können umgesetzt werden:
- erase zur Unterdrückung einer Nachricht - sie wird nicht auf der komplementären Schnittstelle weitergeleitet
- modify (mit Parameterliste) zum Verändern beliebiger Parameter

Durch die Platzierung des Steuerwortes innerhalb der Sequenzbeschreibung ist die Netzwerkbeeinflussung kontextabhängig möglich. Ein Beispiel ist die Unterdrückung eines Profinet Connect Request innerhalb eines Verbindungsaufbaus, um direkt im Anschluss das Senden eines Pings durch den Controller zu überprüfen.

Bei der Umwandlung in das Petrinetz 1103 wird solch eine Manipulation als Aktion interpretiert und an die entsprechende Transition angehängt. Tritt ein der Transition zugeordnetes Ereignis ein und Vor- sowie Nachbedingung sind erfüllt, so feuert die Transition und führt die Aktion aus. Im Fall einer Parameteränderung wird nicht einfach die unkodierte Nachricht auf der komplementären Schnittstelle weitergeleitet. Stattdessen wird der entsprechende Parameter im abstrakten Ereignis geändert und dieses zu einer vollständigen Nachricht kodiert. Diese wird an Stelle der Originalen weitergeleitet. Durch Programme wie tshark lässt sich der Datenverkehr auf beiden Netzwerkschnittstellen parallel zur Diagnose mitschneiden. Dadurch ist die unveränderte Nachricht auf der einen, als auch die veränderte auf der anderen Schnittstelle aufzeichenbar. Dort wird ebenso die Reaktion des angeschlossenen Netzwerkes überwacht und durch das Diagnosewerkzeug sofort mit ausgewertet. Dies ermöglicht Testszenarien, die bisher gar nicht oder nur mit sehr hohem Aufwand möglich sind. Schließlich lassen sich nahezu beliebige Parameteränderungen vornehmen, beispielweise, um defekte Geräte zu simulieren.

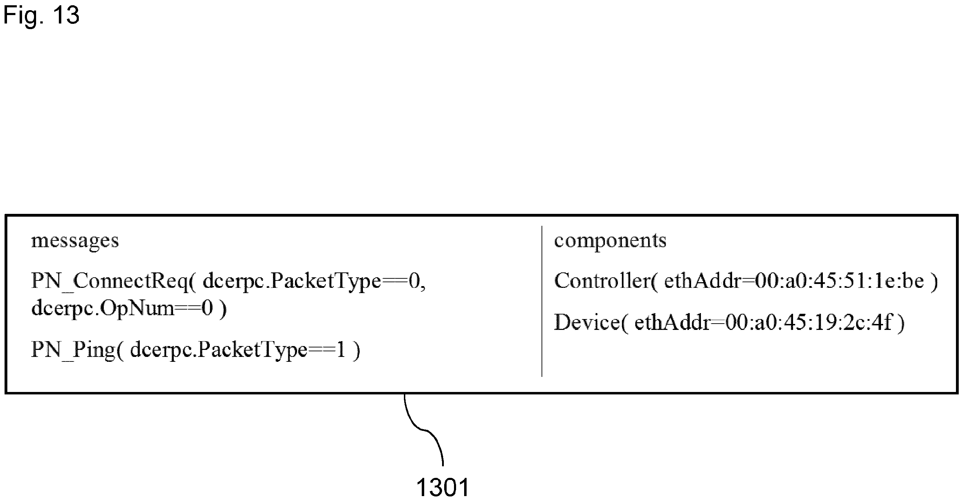

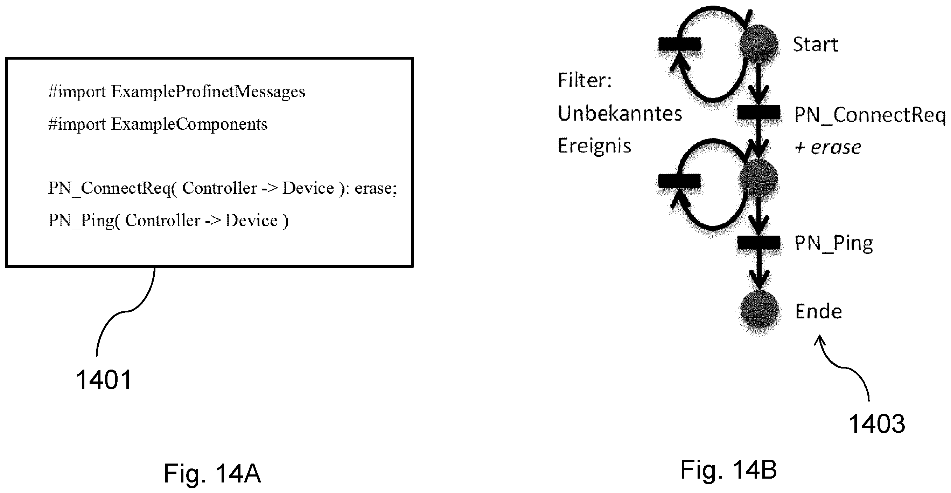

Fig. 13 zeigt eine Definition 1301 für ein Diagnosebeispiel. Ferner zeigt Fig. 14A eine Modifizierungsvorschrift 1401 für das in Fig. 13 gezeigte Diagnosebeispiel und Fig. 14B zeigt ein automatisch generiertes weiteres Petrinetz 1403 für die in Fig. 14A gezeigte Modifizierungsvorschrift 1401. Hierbei kann die Modifizierungsvorschrift 1401 ein Sollverhalten für das Diagnosebeispiel repräsentieren.

Der Diagnoseablauf wird an dem bereits erwähnten Fall demonstriert, dass ein Connect Request unterdrückt und der darauf folgende Ping überprüft wird. Die Parametrierung beginnt mit der Prüfung, ob eine passende Profinet-Bibliothek vorhanden ist. In dieser können mindestens die Nachrichten Connect Request und Ping definiert sein. Als Parameter dienen dabei Bezeichner, die das Dekodierungsmodul anbietet. Entweder in derselben, oder für eine bessere Modularisierung in einer weiteren Definitionsdatei werden die MAC-Adressen von Controller und Device des zu testenden Netzwerks notiert. Als Parameter dient ein Schlüsselwort, das den eigentlich nötigen Parameterbezeichner des Dekodierungsmoduls erst heranzieht, wenn innerhalb des Sollverhaltens die Rolle als Sender oder Empfänger festgelegt wurde. Die Resultate sind in der Fig. 13 zu sehen.

Als zweites geschieht die Erstellung des Testfalls als Sollsequenz. Zu Beginn werden die oben genannten Definitionen eingebunden. Darunter wird das Connect Request als erwartete Nachricht und damit Pflicht-Ereignis notiert. Dahinter zeigt das Schlüsselwort erase an, dass beim Erkennen des Connect Request dieses nicht auf die komplementäre Schnittstelle weiterzuleiten ist. Da das Device diese Nachricht nicht erhält, wird es nicht mit einer Connect Response antworten. Der Controller wird einen Ping senden, um die Erreichbarkeit des Devices zu prüfen. Zum Verifizieren dieses Sollverhaltens wird als nächstes auch der Ping als erwartetes Ereignis notiert. Das Ergebnis ist in der Fig. 14A dargestellt.

Beim Start der Diagnose durch den Benutzer wird der Testfall erst in ein internes Sequenz- und danach in ein weiteres Petrinetz 1403 umgewandelt, wie in der Fig. 14B dargestellt ist. Nun werden alle auf einer Netzwerkschnittstelle ankommenden Daten über die PCAP-Schnittstelle eingelesen, dekodiert und einem Ereignis aus dem Sollverhalten zugewiesen. Dort nicht genannte Nachrichten, wie beispielweise ein DCP Ident Request, werden als unbekannte Ereignisse interpretiert und bringen lediglich die Filter-Transitionen zum Feuern. Ein Connect Request vom korrekten Controller zum Device lässt jedoch die entsprechende Transition feuern und löst gleichzeitig die erase-Aktion aus: Der zum Connect Request gehörende, unkodierte Bytestrom wird nicht weitergeleitet. Wird nun, insbesondere nach unbestimmter Zeit, ein Ping erkannt, so feuert auch die letzte Transition. Das Diagnosemodul erkennt, dass eine Marke auf der globalen End-Stelle liegt, sieht die Diagnose als erfolgreich an und meldet dies dem Benutzer.

Während der Entwicklung netzwerkbasierter Applikationen können diese auf korrekte Funktion getestet werden. Die Analysevorrichtung 100 kann sich an der üblichen Vorgehensweise eines Testers orientieren: Eine Reihe stark spezialisierter Testfälle zu definieren und diese einzeln gegen das Ist-Verhalten zu prüfen. Ferner unterstützt die Analysevorrichtung 100 über einen Editor die Erstellung und Pflege solcher Testfälle und führt die Tests vollautomatisch durch. Benutzer der Analysevorrichtung 100 können intuitiv ihre üblichen Testabläufe hinterlegen und pflegen.

Ferner können Möglichkeiten untersucht werden, Testfälle bzw. unabhängige Sollverhalten zu beschreiben. Als weit verbreiteter Standard können die UML betrachtet und Sequenzdiagramme 903, 1101 als am geeignetsten angesehen werden, die Nachrichtenübertragung von einem Sender zu einem Empfänger auf einem Bus nachzubilden. Eng verwandt sind MSCs, deren Eigenschaften ebenfalls untersucht wurden. Ferner kann die textuelle Grammatik der MSCs vorteilhaft sein, um einfach zu parsende Sollverhalten in sequentieller Form aufzustellen. Diese sind nachträglich in grafische Diagramme für eine praktische Übersicht überführbar. Ferner können zusätzliche Fragmente der UML SDs eingeführt werden, um die Validität von Nachrichten eingrenzen zu können. Als Resultat kann eine domänenspezifische Sprache geschaffen werden, die sich an beiden Standards orientiert.

Ein Bibliothekskonzept erlaubt die unabhängige Erstellung von Definitionen, die auf die Parameter erforderlicher Nachrichten als auch beteiligter Komponenten zurückgreifen. Ebenfalls sind die Testfälle als voneinander unabhängige Sequenzen erstellbar. Diese verbergen die protokollspezifischen Parameter hinter abstrakten Ereignissen. Der Vorteil ist eine erhöhte Übersichtlichkeit und die Erweiterung des Nutzerkreises.

Um zur Laufzeit alle validen Nachrichten bestimmen zu können, sind eingetretene Ereignisse zu speichern und damit der aktuelle Zustand nachzuverfolgen. Dies geschieht vorzugsweise über ein internes Graphenmodell, in das das Sequenzmodell vor Diagnosestart zu überführt werden kann. Konkret kann das Petrinetz 1103 gewählt werden. Ausgehend von einer Stelle stehen alle feuerbaren Transitionen für valide Ereignisse bzw. Nachrichten im Netzwerk. Das Petrinetz 1103 kann dahingehend erweitert werden, dass mehrere Ereignisse einer Transition und diese wiederum mehreren Folgeaktionen zuordenbar sind.

Mit dem Betrieb auf einem nichtechtzeitfähigen Betriebssystem bestehen zunächst Latenzen, die durch Thread-Management und Scheduler recht hoch sein können. Dies kann den Einsatz in Netzwerken mit kurzen Zykluszeiten erschweren. Darüber hinaus besteht stets die Möglichkeit von Jittern, die die Echtzeitfähigkeit von Protokollen wie Profinet beeinflussen können. Daher kann es vorteilhaft sein, eine Diagnosesoftware, mittels welcher das Verfahren 200 ausführbar ist, auf Embedded-Systemen oder den Steuerungen selbst zu implementieren. Darüber hinaus kann es vorteilhaft sein, die Erstellung von Definitionen auf der Basis des tatsächlichen Nachrichtenstroms zu vereinfachen. Ein Beispiel sind die MAC-Adressen aller beteiligten Geräte.

Letztendlich bietet die Analysevorrichtung 100 neue Möglichkeiten, um Analyse und Test von Ethernet-basierter Kommunikation zu vereinfachen. Ferner kann es vorteilhaft sein, die Diagnose z. B. in Form von Bibliotheken mit typischen Problemfällen zu vereinfachen. Diese Fälle können durch den Benutzer, ohne Änderung des Diagnosewerkzeugs, wie der Analysevorrichtung 100, selbst, manipuliert oder ergänzt werden.

Gemäß einer Ausführungsform kann die Analysevorrichtung 100 zum Vergleich der Kommunikationssequenz 801, wie einer realen Ethernet-Kommunikationssequenz, gegen die Sollkommunikationssequenz 803, wie eine frei programmierbare Sollsequenz, verwendet werden, wobei eine Darstellung von Abweichungen realisiert werden kann, wenn die reale Kommunikationssequenz 801 nicht der Sollkommunikationssequenz 803, wie der Sollsequenz, entspricht. Bei Übereinstimmung kann ferner eine Erfolgsmeldung angezeigt werden.

Gemäß einer weiteren Ausführungsform kann die Kommunikationssequenz 801 offline aufgezeichnet worden sein und später mit der Sollkommunikationssequenz 803 verglichen werden.

Gemäß einer weiteren Ausführungsform kann der Vergleich mit der Sollkommunikationssequenz 803 bei laufender Kommunikation stattfinden, indem der Datenverkehr von der Analysevorrichtung 100 mitgehört wird.

Gemäß einer weiteren Ausführungsform kann eine kontextabhängige Manipulation von Protokollsequenzen beim Durchleiten durch die Analysevorrichtung 100 mit anschließendem Vergleich gegen die Sollkommunikationssequenz 803 oder gegen das erwartete Sollverhalten durchgeführt werden.

Gemäß einer weiteren Ausführungsform kann eine Aufzeichnung der Daten vor und nach der Manipulation und Speichern in einer Datei durchgeführt werden, die von einem Netzwerkdiagnosewerkzeug oder mittels der Analysevorrichtung 100 angezeigt werden kann.

Gemäß einer weiteren Ausführungsform kann eine grafische Darstellung des Sollverhaltens in Form von UML SD-Graphen durchgeführt werden, beispielsweise mittels eines Anzeigeelementes der Analysevorrichtung 100.

Gemäß einer weiteren Ausführungsform kann eine grafische Darstellung des Ist-Verhaltens in Form von UML SD-Graphen durchgeführt werden, beispielsweise mittels eines Anzeigeelementes der Analysevorrichtung 100.

Gemäß einer weiteren Ausführungsform kann eine Darstellung der Unterschiede zwischen Soll- und Ist-Verhalten in textueller oder grafischer Form durchgeführt werden.

Gemäß einer weiteren Ausführungsform können Bibliotheken mit einer Definition von wiedervorkommenden Komponenten eines Ethernet Netzwerks zur Ausführung des Verfahrens 200 verwendet werden.

Gemäß einer weiteren Ausführungsform können Bibliotheken mit einer Definition von spezifischen Nachrichten eines Ethernet-Netzwerks zur Ausführung des Verfahrens 200 verwendet werden.

Gemäß einer weiteren Ausführungsform können Bibliotheken mit einer Definition von Sollkommunikationssequenzen 803 zur Ausführung des Verfahrens 200 verwendet werden.

Gemäß einer weiteren Ausführungsform kann mittels der vorgenannten Bibliotheken ein Konzept zur Verwaltung von Komponenten, Nachrichten und Sollsequenzen bereitgestellt werden, ohne dass die darin enthaltenen Details einem Benutzer, beispielsweise der Analysevorrichtung, bekannt sind. Hierdurch kann ein Know How-Schutz erreicht werden.

Gemäß einer weiteren Ausführungsform kann das Verfahren 200 mittels eines Computerprogrammproduktes, wie einer Software, ausgeführt werden.

Gemäß einer weiteren Ausführungsform kann das Computerprogrammprodukt auf einem Rechner mit zwei Netzwerkschnittstellen zur Online-Analyse und
Manipulation ausgeführt werden.

Gemäß einer weiteren Ausführungsform kann das Computerprogrammprodukt auf einem Rechner mit einer Netzwerkschnittstelle zur Online-Analyse ausgeführt werden.

Gemäß einer weiteren Ausführungsform kann ein Import von aufgezeichneten Protokollsequenzen in den Speicher 101 der Analysevorrichtung 100 durchgeführt werden.

Gemäß einer weiteren Ausführungsform kann eine Fernsteuerung der Analysevorrichtung 100 zum Zwecke der Testautomatisierung oder zum Monitoring aus einer Leitwarte durchgeführt werden.

Gemäß einer weiteren Ausführungsform kann eine Integration der Sequenzbeschreibungen aus einer Onlineplattform in den Speicher 101 der Analysevorrichtung 100 erfolgen.

Gemäß einer weiteren Ausführungsform kann die Analysevorrichtung 100 in einer Steuerung integriert sein.

Gemäß einer weiteren Ausführungsform kann die Analysevorrichtung 100 in einem Feldgerät integriert sein.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

### BEZUGSZEICHENLISTE

- 100: Analysevorrichtung
- 101: Speicher
- 103: Prozessor

- 200: Verfahren
- 201: Auslesen
- 203: Erstellen
- 205: Vergleichen

- 300: Anordnung
- 301: Erstes Teilnetzwerk
- 303: Zweites Teilnetzwerk

- 400: Weitere Anordnung
- 401: Kommunikationsnetzwerk
- 403: Switch
- 405: Mirroring-Port

- 500: Weitere Anordnung
- 501: Network-Tap
- 503: Tx-Schnittstelle
- 505: Rx-Schnittstelle
- 507: Merger

- 600: Weitere Anordnung
- 601: Weiterer Speicher

- 700: Diagramm
- 701: Erstes Datenverarbeitungsmodul
- 703: Zweites Datenverarbeitungsmodul
- 705: Drittes Datenverarbeitungsmodul
- 707: Viertes Datenverarbeitungsmodul
- 709: Fünftes Datenverarbeitungsmodul
- 800: Diagramm
- 801: Kommunikationssequenz
- 803: Sollkommunikationssequenz
- 805: Sequenzmodell

- 901: Textuelle Sequenz
- 903: Sequenzdiagramm
- 905: Erster Kommunikationsteilnehmer
- 907: Zweiter Kommunikationsteilnehmer
- 909: Dritter Kommunikationsteilnehmer
- 911: Erste Nachricht
- 913: Zweite Nachricht

- 1001: Erste Bibliothek
- 1003: Zweite Bibliothek
- 1005: Nachricht
- 1007: Ereignis

- 1101: Sequenzdiagramm
- 1103: Petrinetz

- 1201: Steuergerät
- 1203: Erster Kommunikationsschritt
- 1205: Zweiter Kommunikationsschritt
- 1207: Dritter Kommunikationsschritt

- 1301: Definition

- 1401: Modifizierungsvorschrift
- 1403: Weiteres Petrinetz

## Patentansprüche

1. Analysevorrichtung (100) zur Analyse einer Kommunikationssequenz (801), mit:
einem Speicher (101), in welchem eine Sollkommunikationssequenz (803) gespeichert ist;
einem Prozessor (103), welcher ausgebildet ist, die Sollkommunikationssequenz (803) aus dem Speicher (101) auszulesen, in Abhängigkeit von der ausgelesenen Sollkommunikationssequenz (803) ein Petrinetz (1103, 1403) zu erstellen und die Kommunikationssequenz (801) mit dem erstellten Petrinetz (1103, 1403) zu vergleichen, um die Kommunikationssequenz (801) zu analysieren,
wobei das Vergleichen der Kommunikationssequenz (801) mit dem Petrinetz (1103, 1403) ein Vergleichen von aus dem Petrinetz auslesbaren Datenpaketen mit Datenpaketen der Kommunikationssequenz (801) umfasst; und
einer Kommunikationsschnittstelle, welche ausgebildet ist, in einem Kommunikationsnetzwerk übertragene Datenpakete zu erfassen, um die Kommunikationssequenz (801) zu erhalten,
wobei in dem Speicher (101) ferner eine Modifizierungsvorschrift (1401) gespeichert ist, und wobei der Prozessor (103) ferner ausgebildet ist, die Modifizierungsvorschrift (1401) aus dem Speicher (101) auszulesen, und ausgebildet ist, eine modifizierte Kommunikationssequenz durch Modifizieren eines mittels der Kommunikationsschnittstelle erfassten Datenpakets in Abhängigkeit von der Modifizierungsvorschrift (1401) zu erzeugen.

2. Analysevorrichtung (100) nach Anspruch 1, wobei der Prozessor (103) ausgebildet ist, die Kommunikationssequenz (801) auf Konformität mit dem erstellten Petrinetz (1103, 1403) zu prüfen, um die Kommunikationssequenz (801) mit dem erstellten Petrinetz (1103, 1403) zu vergleichen.

3. Analysevorrichtung (100) nach Anspruch 1 oder 2, wobei die Sollkommunikationssequenz (803) in Form einer textuellen Sequenz (901) oder in Form eines Sequenzdiagramms (903, 1101) in dem Speicher (101) gespeichert ist.

4. Analysevorrichtung (100) nach einem der vorangehenden Ansprüche, mit einem Editor zum Erstellen der Sollkommunikationssequenz (803).

5. Analysevorrichtung (100) nach einem der vorangehenden Ansprüche, wobei der Prozessor (103) ferner ausgebildet ist, auf der Basis des Vergleichs der Kommunikationssequenz (801) mit dem erstellten Petrinetz (1103, 1403) einen Analysebericht zu erstellen.

6. Analysevorrichtung (100) nach Anspruch 5, mit einem Anzeigeelement zum grafischen Anzeigen des erstellten Analyseberichts.

7. Analysevorrichtung (100) nach einem der vorangehenden Ansprüche, wobei die Kommunikationssequenz (801) in dem Speicher (101) gespeichert ist, und wobei der Prozessor (103) ausgebildet ist, die Kommunikationssequenz (801) aus dem Speicher (101) auszulesen.

8. Analysevorrichtung (100) nach einem der vorangehenden Ansprüche, wobei die Kommunikationsschnittstelle zumindest eine Ethernet-Schnittstelle umfasst.

9. Analysevorrichtung (100) nach einem der vorangehenden Ansprüche, wobei die Kommunikationsschnittstelle ausgebildet ist, das modifizierte Datenpaket auszugeben.

10. Analysevorrichtung (100) nach einem der vorangehenden Ansprüche, wobei der Prozessor (103) ferner ausgebildet ist, die modifizierte Kommunikationssequenz mit dem erstellten Petrinetz (1103, 1403) zu vergleichen und auf der Basis des Vergleichs der modifizierten Kommunikationssequenz mit dem erstellten Petrinetz (1103, 1403) einen weiteren Analysebericht zu erstellen.

11. Analysevorrichtung (100) nach Anspruch 10, mit einem Anzeigeelement zum grafischen Anzeigen des erstellten weiteren Analyseberichts.

12. Analysevorrichtung (100) nach einem der vorangehenden Ansprüche, wobei die Modifizierungsvorschrift (1401) in Form einer textuellen Sequenz (901) oder in Form eines Sequenzdiagramms (903, 1101) in dem Speicher gespeichert ist.

13. Analysevorrichtung (100) nach einem der vorangehenden Ansprüche, mit einem Editor zum Erstellen der Modifizierungsvorschrift (1401).

14. Verfahren (200) zur Analyse einer Kommunikationssequenz (801), mit:
Auslesen (201) einer Sollkommunikationssequenz (803) aus einem Speicher (101);
Erstellen (203) eines Petrinetzes (1103, 1403) in Abhängigkeit von der ausgelesenen Sollkommunikationssequenz (803) mittels eines Prozessors (103);
Vergleichen (205) der Kommunikationssequenz (801) mit dem erstellten Petrinetz (1103, 1403) mittels des Prozessors (103), um die Kommunikationssequenz (801) zu analysieren,
wobei das Vergleichen der Kommunikationssequenz (801) mit dem Petrinetz (1103, 1403) ein Vergleichen von aus dem Petrinetz auslesbaren Datenpaketen mit Datenpaketen der Kommunikationssequenz (801) umfasst;
Erfassen von in einem Kommunikationsnetzwerk übertragenen Datenpaketen mittels einer Kommunikationsschnittstelle, um die Kommunikationssequenz (801) zu erhalten;
Auslesen einer Modifizierungsvorschrift (1401) aus dem Speicher (101); und
Erzeugen einer modifizierten Kommunikationssequenz durch Modifizieren eines mittels der Kommunikationsschnittstelle erfassten Datenpaketes in Abhängigkeit von der ausgelesenen Modifizierungsvorschrift (1401).

15. Verfahren (200) nach Anspruch 14, mit:
Ausgeben des modifizierten Datenpaketes über die Kommunikationsschnittstelle.

## Claims

1. Analysis device (100) for analyzing a communication sequence (801), comprising:
a memory (101) in which a target communication sequence (803) is stored;
a processor (103), which is designed to read out the target communication sequence (803) from the memory (101), to create a Petri net (1103, 1403) depending on the read-out target communication sequence (803) and to compare the communication sequence (801) with the created Petri net (1103, 1403) in order to analyze the communication sequence (801),
wherein the comparison of the communication sequence (801) with the Petri net (1103, 1403) comprises comparing data packets read out from the Petri net with data packets of the communication sequence (801); and
a communication interface, which is designed to capture data packets transmitted in a communication network in order to obtain the communication sequence (801),
wherein a modification instruction (1401) is further stored in the memory (101), and wherein the processor (103) is further designed to read out the modification instruction (1401) from the memory (101), and is designed to generate a modified communication sequence by modifying a data packet captured by means of the communication interface depending on the modification instruction (1401).

2. Analysis device (100) according to claim 1, wherein the processor (103) is designed to check that the communication sequence (801) conforms with the created Petri net (1103, 1403) in order to compare the communication sequence (801) with the Petri net (1103, 1403) created.

3. Analysis device (100) according to either claim 1 or claim 2, wherein the target communication sequence (803) is stored in the memory (101) in the form of a textual sequence (901) or in the form of a sequence diagram (903, 1101).

4. Analysis device (100) according to any of the preceding claims, comprising an editor for creating the target communication sequence (803).

5. Analysis device (100) according to any of the preceding claims, wherein the processor (103) is further designed to create an analysis report based on the comparison of the communication sequence (801) with the Petri net (1103, 1403) created.

6. Analysis device (100) according to claim 5, comprising a display element for graphically displaying the analysis report created.

7. Analysis device (100) according to any of the preceding claims, wherein the communication sequence (801) is stored in the memory (101), and wherein the processor (103) is designed to read out the communication sequence (801) from the memory (101).

8. Analysis device (100) according to any of the preceding claims, wherein the communication interface comprises at least one Ethernet interface.

9. Analysis device (100) according to any of the preceding claims, wherein the communication interface is designed to output the modified data packet.

10. Analysis device (100) according to any of the preceding claims, wherein the processor (103) is further designed to compare the modified communication sequence with the Petri net (1103, 1403) created and to create an additional analysis report based on the comparison of the modified communication sequence with the Petri net (1103, 1403) created.

11. Analysis device (100) according to claim 10, comprising a display element for graphically displaying the additional analysis report created.

12. Analysis device (100) according to any of the preceding claims, wherein the modification instruction (1401) is stored in the memory in the form of a textual sequence (901) or in the form of a sequence diagram (903, 1101).

13. Analysis device (100) according to any of the preceding claims, comprising an editor for creating the modification instruction (1401).

14. Method (200) for analyzing a communication sequence (801), comprising:
reading out (201) a target communication sequence (803) from a memory (101);
creating (203) a Petri net (1103, 1403) by means of a processor (103) depending on the read-out target communication sequence (803);
comparing (205), by means of the processor (103), the communication sequence (801) with the created Petri net (1103, 1403) in order to analyze the communication sequence (801),
wherein the comparison of the communication sequence (801) with the Petri net (1103, 1403) comprises comparing data packets that can be read out from the Petri net with data packets of the communication sequence (801);
capturing data packets transmitted in a communication network by means of a communication interface in order to obtain the communication sequence (801);
reading out a modification instruction (1401) from the memory (101); and
generating a modified communication sequence by modifying a data packet captured by means of the communication interface depending on the read-out modification instruction (1401).

15. Method (200) according to claim 14, comprising:
outputting the modified data packet via the communication interface.

## Revendications

1. Dispositif d'analyse (100) destiné à l'analyse d'une séquence de communication (801), avec :
une mémoire (101) dans laquelle est enregistrée une séquence de communication voulue (803) ;
un processeur (103) qui est configuré pour charger la séquence de communication voulue (803) à partir de la mémoire (101), créer un réseau de Petri (1103, 1403) en fonction de la séquence de communication voulue (803) chargée et comparer la séquence de communication (801) avec le réseau de Petri (1103, 1403) créé afin d'analyser la séquence de communication (801),
dans lequel la comparaison de la séquence de communication (801) avec le réseau de Petri (1103, 1403) comprend une comparaison de paquets de données chargeables à partir du réseau de Petri avec des paquets de données de la séquence de communication (801) ; et une interface de communication qui est configurée pour détecter dans un réseau de communication des paquets de données transmis afin d'obtenir la séquence de communication (801),
dans lequel en outre une prescription de modification (1401) est enregistrée dans la mémoire (101), et dans lequel le processeur (103) est en outre configuré pour charger la prescription de modification (1401) à partir de la mémoire (101), et est configuré pour produire une séquence de communication modifiée par la modification d'un paquet de données détecté au moyen de l'interface de communication en fonction de la prescription de modification (1401).

2. Dispositif d'analyse (100) selon la revendication 1, dans lequel le processeur (103) est configuré pour vérifier la conformité de la séquence de communication (801) avec le réseau de Petri (1103, 1403) créé afin de comparer la séquence de communication (801) avec le réseau de Petri (1103, 1403) créé.

3. Dispositif d'analyse (100) selon la revendication 1 ou 2, dans lequel la séquence de communication voulue (803) est enregistrée dans la mémoire (101) sous forme d'une séquence textuelle (901) ou sous forme d'un diagramme de séquence (903, 1101).

4. Dispositif d'analyse (100) selon l'une des revendications précédentes, avec un éditeur destiné à la création de la séquence de communication voulue (803).

5. Dispositif d'analyse (100) selon l'une des revendications précédentes, dans lequel le processeur (103) est en outre configuré pour établir un rapport d'analyse sur la base de la comparaison de la séquence de communication (801) avec le réseau de Petri (1103, 1403) créé.

6. Dispositif d'analyse (100) selon la revendication 5, avec un élément d'affichage destiné à l'affichage graphique du rapport d'analyse établi.

7. Dispositif d'analyse (100) selon l'une des revendications précédentes, dans lequel la séquence de communication (801) est enregistrée dans la mémoire (101), et dans lequel le processeur (103) est configuré pour charger la séquence de communication (801) à partir de la mémoire (101).

8. Dispositif d'analyse (100) selon l'une des revendications précédentes, dans lequel l'interface de communication comprend au moins une interface Ethernet.

9. Dispositif d'analyse (100) selon l'une des revendications précédentes, dans lequel l'interface de communication est configurée pour délivrer le paquet de données modifié.

10. Dispositif d'analyse (100) selon l'une des revendications précédentes, dans lequel le processeur (103) est en outre configuré pour comparer la séquence de communication modifiée avec le réseau de Petri (1103, 1403) créé et établir un autre rapport d'analyse sur la base de comparaison de la séquence de communication modifiée avec le réseau de Petri (1103, 1403) créé.

11. Dispositif d'analyse (100) selon la revendication 10, avec un élément d'affichage destiné à l'affichage graphique de l'autre rapport d'analyse établi.

12. Dispositif d'analyse (100) selon l'une des revendications précédentes, dans lequel la prescription de modification (1401) est enregistrée dans la mémoire sous forme d'une séquence textuelle (901) ou sous forme d'un diagramme de séquence (903, 1101).

13. Dispositif d'analyse (100) selon l'une des revendications précédentes, avec un éditeur destiné à la création de la prescription de modification (1401).

14. Procédé (200) destiné à l'analyse d'une séquence de communication (801), avec :
chargement (201) d'une séquence de communication voulue (803) à partir d'une mémoire (101) ;
création (203) d'un réseau de Petri (1103, 1403) en fonction de la séquence de communication voulue (803) chargée au moyen d'un processeur (103) ;
comparaison (205) de la séquence de communication (801) avec le réseau de Petri (1103, 1403) créé au moyen du processeur (103) afin d'analyser la séquence de communication (801),
dans lequel la comparaison la séquence de communication (801) avec le réseau de Petri (1103, 1403) comprend une comparaison de paquets de données chargeables à partir du réseau de Petri avec des paquets de données de la séquence de communication (801) ;
détection de paquets de données transmis dans un réseau de communication au moyen d'une interface de communication afin d'obtenir la séquence de communication (801) ;
chargement d'une prescription de modification (1401) à partir de la mémoire (101) ; et
production d'une séquence de modification modifiée par modification d'un paquet de données détecté au moyen de l'interface de communication en fonction de la prescription de modification (1401) chargée.

15. Procédé (200) selon la revendication 14, avec :
délivrance du paquet de données modifié par le biais de l'interface de communication.
